# EUROPEAN PATENT APPLICATION

(11) **EP 4 611 456 A1**
(43) Date of publication of application: **03.09.2025**
(21) Application number: 23929300.4
(22) Date of filing: 30.03.2023
(51) Int. Cl.: H04W 72/0446

(54) **DATA TRANSMISSION METHOD AND APPARATUS, AND ELECTRONIC DEVICE**

(71) Applicant: New H3C Technologies Co., Ltd., Hangzhou, Zhejiang 310052 (CN)
(72) Inventor: KONG, Lei, Beijing 100102 (CN); ZHOU, Lei, Beijing 100102 (CN); ZHANG, Jun, Beijing 100102 (CN)
(74) Representative: Bandpay & Greuter
(86) International application number: PCT/CN2023/085095
(87) International publication number: WO 2024/197703

(57) **Abstract**

The present application provides a data transmission method and an apparatus, and an electronic device. The method comprises: determining a PDSCH time-frequency resource corresponding to a first user equipment and an SBFD time-frequency resource corresponding to a second user equipment, wherein the PDSCH time-frequency resource and the SBFD time-frequency resource are located in the same downlink time slot or a special time slot, and the SBFD time-frequency resource is indicated to be used for uplink; sending downlink data corresponding to the first user equipment on the basis of the PDSCH time-frequency resource, wherein the first user equipment is a half-duplex user equipment supporting an SBFD capability; and receiving uplink data corresponding to the second user equipment on the basis of the SBFD time-frequency resource. The technical solution of the present application can increase the resource utilization rate.

## Description

### TECHNICAL FIELD

The present disclosure relates to the field of communication technologies, and in particular, to methods, apparatuses and electronic devices for data transmission.

### BACKGROUND

Time division duplex (TDD) systems are widely applied in mobile communication systems, such as 5G systems. In the TDD systems, the frame structure is divided into Downlink (DL) time slots, Uplink (UL) time slots, and special (S) time slots. The DL slots include a plurality of DL symbols, and frequency-domain resources corresponding to the DL symbols are for DL data. The UL time slots include a plurality of UL symbols, and frequency-domain resources corresponding to the UL symbols are for UL data. The special time slots include at least one flexible (F) symbol. The F symbol may be configured for DL, i.e., frequency-domain resources corresponding to the F symbol are for DL data. The F symbol may also be configured for UL, i.e., frequency-domain resources corresponding to the F symbol are for UL data. The F symbol may also be configured for a guard period, i.e., uplink and downlink switching protection is performed in frequency-domain resources corresponding to the F symbol. The TDD systems may work in a Half-Duplex (HD) mode, i.e., the same frequency-domain resource can be used only for UL or DL at the same moment.

### SUMMARY

The present disclosure provides a data transmission method, applied to a base station, including:
determining a Physical Downlink Shared Channel (PDSCH) time-frequency resource corresponding to a first User Equipment (UE) and a Sub-Band Full-Duplex (SBFD) time-frequency resource corresponding to a second UE, wherein the PDSCH time-frequency resource and the SBFD time-frequency resource are located in a same DL time slot or a same special time slot, and the SBFD time-frequency resource is instructed to be used for UL and/or a guard band;
transmitting DL data corresponding to the first UE based on the PDSCH time-frequency resource, wherein the first UE is a HD UE supporting SBFD capability; and
receiving UL data corresponding to the second UE based on the SBFD time-frequency resource.

The present disclosure provides a data transmission method, applied to a first UE, the first UE being an HD UE supporting SBFD capability, including: determining a PDSCH time-frequency resource and SBFD time-frequency resource, wherein the PDSCH time-frequency resource and the SBFD time-frequency resource are located in a same DL time slot or a same special time slot, and the SBFD time-frequency resource is instructed to be used for UL and/or a guard band;
when there is an overlapping resource between the PDSCH time-frequency resource and the SBFD time-frequency resource, determining an available time-frequency resource based on the PDSCH time-frequency resource and the SBFD time-frequency resource; wherein the available time-frequency resource is a time-frequency resource in the PDSCH time-frequency resource except the overlapping resource; and
receiving DL data corresponding to the first UE based on the available time-frequency resource.

The present disclosure provides a data transmission method, applied to a base station, including:
determining a PUSCH time-frequency resource corresponding to a first UE and a SBFD time-frequency resource corresponding to a second UE, wherein the PUSCH time-frequency resource and the SBFD time-frequency resource are located in a same UL time slot or special time slot, and the SBFD time-frequency resource is instructed to be used for DL and/or a guard band;
when there is an overlapping resource between the PUSCH time-frequency resource and the SBFD time-frequency resource, determining available time-frequency resource based on the PUSCH time-frequency resource and the SBFD time-frequency resource, wherein the available time-frequency resource is a time-frequency resource in the PUSCH time-frequency resource except the overlapping resource;
receiving UL data corresponding to the first UE based on the available time-frequency resource, wherein the first UE is a HD UE supporting SBFD capability; and
transmitting DL data corresponding to the second UE based on the SBFD time-frequency resource.

The present disclosure provides a data transmission method, applied to a first UE, the first UE being an HD UE supporting SBFD capability, including: determining a PUSCH time-frequency resource and a SBFD time-frequency resource, wherein the PUSCH time-frequency resource and the SBFD time-frequency resource are located in a same UL time slot or a same special time slot, and the SBFD time-frequency resource is instructed to be used for DL and/or a guard band;
when there is an overlapping resource between the PUSCH time-frequency resource and the SBFD time-frequency resource, determining an available time-frequency resource based on the PUSCH time-frequency resource and the SBFD time-frequency resource; wherein the available time-frequency resource is a time-frequency resource in the PUSCH time-frequency resource except the overlapping resource; and
transmitting UL data corresponding to the first UE based on the available time-frequency resource.

The present disclosure provides a data transmission apparatus, applied to a base station, including: a determining module, configured to determine a PDSCH time-frequency resource corresponding to first UE and a SBFD time-frequency resource corresponding to a second UE; wherein, the PDSCH time-frequency resource and the SBFD time-frequency resource are located in a same DL time slot or a same special time slot, and the SBFD time-frequency resource is instructed to be used for UL and/or a guard band; a transmitting module, configured to transmit DL data corresponding to the first UE based on the PDSCH time-frequency resource, wherein the first UE is an HD UE enabling SBFD capability; and a receiving module, configured to receive UL data corresponding to the second UE based on the SBFD time-frequency resource.

The present disclosure provides a data transmission apparatus, applied to a first UE, the first UE being an HD UE supporting SBFD capability, including: a determining module, configured to determine a PDSCH time-frequency resource and a SBFD time-frequency resource, wherein the PDSCH time-frequency resource and the SBFD time-frequency resource are located in a same DL time slot or a same special time slot, and the SBFD time-frequency resource is instructed to be used for UL and/or a guard band; a processing module, configured to: when there is an overlapping resource between the PDSCH time-frequency resource and the SBFD time-frequency resource, determine an available time-frequency resource based on the PDSCH time-frequency resource and the SBFD time-frequency resource; wherein the available time-frequency resource is a time-frequency resource in the PDSCH time-frequency resource except the overlapping resource; and receive DL data corresponding to the first UE based on the available time-frequency resource.

The present disclosure provides a data transmission apparatus, applied to a base station, including:
a determining module, configured to determine a PUSCH time-frequency resource corresponding to a first UE and a SBFD time-frequency resource corresponding to a second UE; wherein, the PUSCH time-frequency resource and the SBFD time-frequency resource are located in a same UL time slot or a same special time slot, and the SBFD time-frequency resource is instructed to be used for DL and/or a guard band;
a processing module, configured to: when there is an overlapping resource between the PUSCH time-frequency resource and the SBFD time-frequency resource, determine an available time-frequency resource based on the PUSCH time-frequency resource and the SBFD time-frequency resource, wherein the available time-frequency resource is the time-frequency resource in the PUSCH time-frequency resource except the overlapping resource; receive UL data corresponding to the first UE based on the available time-frequency resource; wherein, the first UE is an HD UE supporting SBFD capability; a transmitting module, configured to transmit DL data corresponding to the second UE based on the SBFD time-frequency resource.

The present disclosure provides a data transmission apparatus, applied to a first UE, the first UE being an HD UE supporting SBFD capability, including: a determining module, configured to determine a PUSCH time-frequency resource and a SBFD time-frequency resource, wherein the PUSCH time-frequency resource and the SBFD time-frequency resource are located in a same UL time slot or a same special time slot, and the SBFD time-frequency resource is instructed to be used for DL and/or a guard band; a processing module, configured to: when there is an overlapping resource between the PUSCH time-frequency resource and the SBFD time-frequency resource, determine an available time-frequency resource based on the PUSCH time-frequency resource and the SBFD time-frequency resource; wherein the available time-frequency resource is a time-frequency resource in the PUSCH time-frequency resource except the overlapping resource; and a transmitting module, configured to transmit UL data corresponding to the first UE based on the available time-frequency resource.

The present disclosure provides an electronic device, including: one or more processors, and one or more machine-readable storage media, wherein the one or more machine-readable storage media store machine-executable instructions capable of being executed by the one or more processors, wherein the one or more processors are configured execute the machine-executable instructions to implement the method of transmitting data as disclosed above.

It can be seen from the above technical solutions that when the SBFD time-frequency resource overlap with the PDSCH time-frequency resource, the base station can make full use of the PDSCH time-frequency resource to schedule the transmission of UEs. The UE can learn the PDSCH time-frequency resource, and the SBFD time-frequency resource configuration and PDSCH time-frequency resource configuration can be effectively implemented. From the perspective of the entire system, it can increase cell coverage, reduce transmission delays, and increase UL transmission capacity. It can support data transmission of the TDD systems, improve resource utilization, improve network coverage and network capacity, increase UL transmission resource and cell coverage, reduce UL transmission delay and increase UL transmission capacity.

### BRIEF DESCRIPTION OF DRAWINGS

FIG. 1A and FIG. 1B illustrate schematic flowcharts of data transmission methods in one example;
FIG. 2A and FIG. 2B illustrate schematic flowcharts of data transmission methods in one example;
FIG. 3 illustrates a schematic diagram of dynamically scheduling PDSCH time-frequency resources in one example;
FIG. 4 illustrates a schematic diagram of inter-slot repetition transmission data in one example;
FIG. 5A illustrates a schematic diagram of TDMSchemeA, intra-slot repetition transmission mechanism, in one example;
FIG. 5B illustrates a schematic diagram of intra-slot frequency division multiplexing (FDM) repetition transmission mechanism in one example;
FIG. 5C illustrates a schematic diagram of intra-slot FDM repetition transmission mechanism in one example; and
FIG. 6 illustrates a schematic diagram of PDSCH frequency-domain resource allocation in one example.

### DETAILED DESCRIPTION

The terms used in examples of the present disclosure are intended to describe the particular examples only, and not to limit the present disclosure. The terms determined by "a", "the" and "said" in their singular forms in the present disclosure and the appended claims are also intended to include their plural forms, unless clearly indicated otherwise in the context. It should also be understood that the term "and/or" as used herein refers to any and all possible combinations that include one or more of the associated listed items.

It is to be understood that, although terms "first", "second", "third" and the like may be used in the present disclosure to describe various information, such information should not be limited to these terms. These terms are only used to distinguish information of the same category with each other. For example, without departing from the scope of the present disclosure, first information may be referred as second information; and similarly, second information may also be referred as first information. Depending on the context, the word "if" as used herein may be interpreted as "when" or "upon" or "in response to determining".

The TDD systems may work in an HD mode, in which the same frequency-domain resources may only be configured for UL or DL at the same moment. In order to utilize the frequency-domain resource more flexibly and to improve resource utilization, the TDD system may also work in a Full-Duplex (FD) mode, i.e., the same frequency-domain resources are configured for both UL and DL at the same time, i.e., the same frequency-domain resources may be configured for processing both UL data and DL data.

In the TDD systems, the frame structure is divided into DL time slots, UL time slots, and special time slots, while UE can transmit and receive data in accordance with the frame structure once it is determined. For a UE adopting the HD mode, a base station (e.g., gNB, etc.,) may schedule the UE to perform data transmitting or data receiving in accordance with the frame structure. For a UE adopting the FD mode, the base station may schedule the UE to perform data transmitting, data receiving, or data transmitting and receiving in accordance with the frame structure.

To summarize, the base station may configure the frame structure and inform the UE of the frame structure, so that the UE is informed of the frame structure and can transmit or receive data correctly. Further, after getting the frame structure, the UE may further know possible inter-UE interference, so as to adopt some interference cancellation techniques to mitigate the interference, thereby improving communication reliability.

In one example, under the TDD system, a frame structure mainly for DL transmission is usually configured with more DL time slots, which results in fewer UL time slots, thereby limiting a UL transmission rate, increasing transmission time delay of UL data, and not conducive to UL services.

In one example of the present disclosure, a data transmission method is proposed. According to the method, by configuring flexible DL frequency-domain resources and UL frequency-domain resources based on SBFD time-frequency resources for UE, the UE can transmit UL data in the UL frequency-domain resource. In other words, by enabling the UE to transmit UL data via UL frequency-domain resources configured in DL time slots or special time slots, the method can improve the UL transmission rate and reduce the transmission delay of UL data effectively. In addition, UL time slots and special time slots can also be used to configure DL frequency-domain resources for transmitting DL data, so as to improve the DL transmission rate and reduce the transmission delay of DL data.

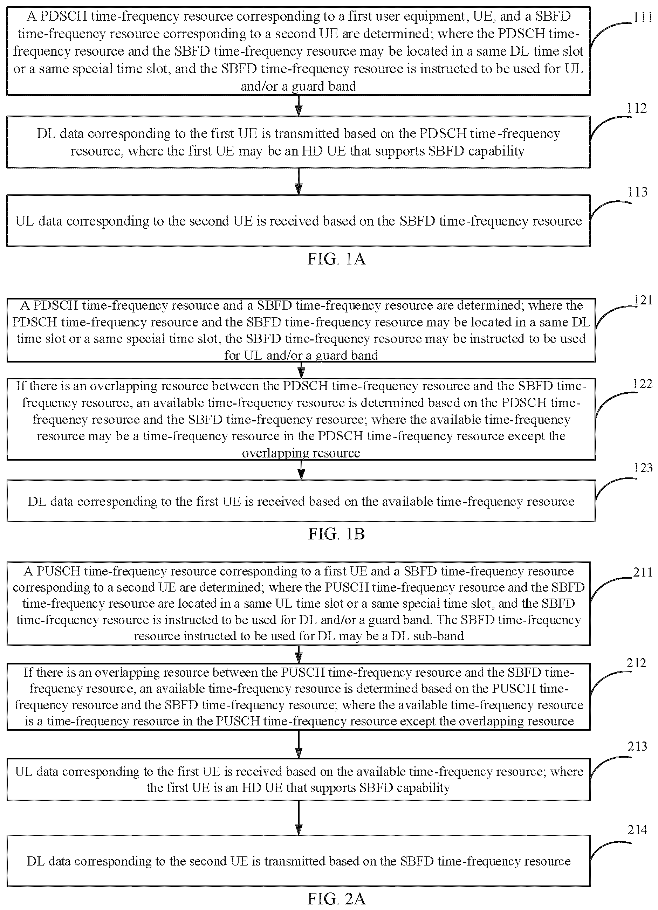

In one example of the present disclosure, a data transmission method is proposed, and the data transmission method may be applied to the base station. As illustrated in FIG. 1A, which is a schematic flowchart of a data transmission method, the method may include the following.

At step 111: a PDSCH time-frequency resource corresponding to a first user equipment, UE, and a SBFD time-frequency resource corresponding to a second UE are determined; where the PDSCH time-frequency resource and the SBFD time-frequency resource may be located in a same DL time slot or a same special time slot, and the SBFD time-frequency resource is instructed to be used for UL and/or a guard band.

In one example, the SBFD time-frequency resource may be instructed to be used for UL, the SBFD time-frequency resource may be instructed to be used for a guard band, or the SBFD time-frequency resource may be instructed to be used for both UL and a guard band. The SBFD time-frequency resource instructed to be used for UL may be a UL sub-band.

At step 112: DL data corresponding to the first UE is transmitted based on the PDSCH time-frequency resource, where the first UE may be an HD UE that supports SBFD capability.

At step 113: UL data corresponding to the second UE is received based on the SBFD time-frequency resource.

In one example, if the SBFD time-frequency resource is instructed to be used for UL, the second UE can transmit the UL data via the SBFD time-frequency resource, and the base station can receive the UL data via the SBFD time-frequency resource. If the SBFD time-frequency resource is instructed to be used for a guard band, the second UE does not transmit the UL data via the SBFD time-frequency resource, and the base station also does not receive the UL data. If the SBFD time-frequency resource is instructed to be used for UL and the guard band, the second UE may transmit the UL data within the resource instructed to be used for the UL, and the base station may receive the UL data via the resource instructed to be used for the UL.

In one example of the present disclosure, a data transmission method is proposed, and the data transmission method may be applied to the first UE which is an HD UE supporting SBFD capability. As illustrated in FIG. 1B, which is a schematic flowchart of a data transmission method, the method may include the following.

At step 121: a PDSCH time-frequency resource (i.e., the PDSCH time-frequency resource corresponding to the first UE) and a SBFD time-frequency resource are determined; where the PDSCH time-frequency resource and the SBFD time-frequency resource may be located in a same DL time slot or a same special time slot, the SBFD time-frequency resource may be instructed to be used for UL and/or a guard band.

At step 122: if there is an overlapping resource between the PDSCH time-frequency resource and the SBFD time-frequency resource, an available time-frequency resource is determined based on the PDSCH time-frequency resource and the SBFD time-frequency resource; where the available time-frequency resource may be a time-frequency resource in the PDSCH time-frequency resource except the overlapping resource.

At step 123: DL data corresponding to the first UE is received based on the available time-frequency resource.

In one example, the PDSCH time-frequency resource may be dynamically scheduled or semi-persistently scheduled. The SBFD time-frequency resource may be semi-statically configured, or dynamically configured.

The PDSCH time-frequency resource is configured to transmit PDSCH initial transmission data, PDSCH retransmission data based on Hybrid Automatic Repeat reQuest (HARQ) feedback, or PDSCH repetition transmission data.

In one example, the PDSCH time-frequency resource is dynamically scheduled and is used for transmitting PDSCH initial transmission data, and in this case, a data transmission scheme may be to allow data transmission or to prohibit the data transmission. Based on this, if there is no overlapping resource between the PDSCH time-frequency resource and the SBFD time-frequency resource, the base station transmits DL data corresponding to the first UE based on the PDSCH time-frequency resource, and the first UE may receive the DL data base on the PDSCH time-frequency resource.

Or, if there is an overlapping resource between the PDSCH time-frequency resource and the SBFD time-frequency resource, when the data transmission scheme is to allow the data transmission, the base station determines an available time-frequency resource based on the PDSCH time-frequency resource and the SBFD time-frequency resource, and transmits the DL data corresponding to the first UE based on the available time-frequency resource, where the available time-frequency resource is a time-frequency resource in the PDSCH time-frequency resource except the overlapping resource. The first UE also determines an available time-frequency resource based on the PDSCH time-frequency resource and the SBFD time-frequency resource, and receives the DL data based on the available time-frequency resource, where the available time-frequency resource is a time-frequency resource in the PDSCH time-frequency resource except the overlapping resource.

Or, if there is an overlapping resource between the PDSCH time-frequency resource and the SBFD time-frequency resource, when the data transmission scheme is to prohibit the data transmission, the base station prohibits transmitting the DL data corresponding to the first UE based on the PDSCH time-frequency resource, and the first UE does not receive DL data base on the PDSCH time-frequency resource.

When the data transmission scheme is allowing the data transmission, the base station transmits the DL data corresponding to the first UE based on the available time-frequency resource, which may include but is not limited to: the base station determines a target transport block size (TBS) based on a size of the available time-frequency resource, and transmits the DL data matching the target TBS on the available time-frequency resource. Or, the base station performs rate matching on DL data corresponding to the first UE on the available time-frequency resource, and transmits the rate matched DL data on the available time-frequency resource.

In another one example, the PDSCH time-frequency resource is dynamically scheduled and is used for transmitting PDSCH retransmission data based on HARQ feedback or PDSCH repetition transmission data; or, the PDSCH time-frequency resource is semi-persistently scheduled and is used for transmitting PDSCH initial transmission data, PDSCH retransmission data based on HARQ feedback or PDSCH repetition transmission data, and in this case, the data transmission scheme may be to allow or prohibit the data transmission. Based on this, if there is no overlapping resource between the PDSCH time-frequency resource and the SBFD time-frequency resource, the base station transmits the DL data corresponding to the first UE based on the PDSCH time-frequency resource, and the first UE may receive the DL data base on the PDSCH time-frequency resource.

Or, if there is an overlapping resource between the PDSCH time-frequency resource and the SBFD time-frequency resource, when the data transmission scheme is allowing the data transmission, the base station determines an available time-frequency resource based on the PDSCH time-frequency resource and the SBFD time-frequency resource, and transmits the DL data corresponding to the first UE based on the available time-frequency resource, where the available time-frequency resource is a time-frequency resource in the PDSCH time-frequency resource except the overlapping resource. The first UE also determines an available time-frequency resource based on the PDSCH time-frequency resource and the SBFD time-frequency resource, and receives the DL data based on the available time-frequency resource, where the available time-frequency resource is a time-frequency resource in the PDSCH time-frequency resource except the overlapping resource.

Or, if there is the overlapping resource between the PDSCH time-frequency resource and the SBFD time-frequency resource, when the data transmission scheme is to prohibit the data transmission, the base station prohibits transmitting the DL data corresponding to the first UE based on the PDSCH time-frequency resource, and the first UE does not receive the DL data base on the PDSCH time-frequency resource.

When the data transmission scheme is to allow the data transmission, the base station transmits the DL data corresponding to the first UE based on the available time-frequency resource, which may include: performing rate matching on DL data corresponding to the first UE on the available time-frequency resource, and transmitting the rate matched DL data on the available time-frequency resource.

In one example, transmitting the rate matched DL data on the available time-frequency resource may include but is not limited in that: if an effective code rate corresponding to the rate matched DL data is less than a set effective code rate threshold, the rate matched DL data may be transmitted on the available time-frequency resource.

In one example, if the effective code rate corresponding to the rate matched DL data is not less than the set effective code rate threshold, transmitting the rate matched DL data on the available time-frequency resource is prohibited.

In one example, the PDSCH time-frequency resource is dynamically scheduled and is used for transmitting PDSCH retransmission data based on HARQ feedback or PDSCH repetition transmission data; or, the PDSCH time-frequency resource is semi-persistently scheduled and is used for transmitting PDSCH initial transmission data, PDSCH retransmission data based on HARQ feedback or PDSCH repetition transmission data. In this case, the base station may also transmit indication information of the data transmission scheme to the first UE, where the indication information is configured to indicate that the data transmission scheme is to allow or prohibit data transmission. The first UE receives the indication information of the data transmission scheme transmitted by the base station, and determines whether the data transmission scheme is to allow or prohibit the data transmission based on the indication information.

The base station transmits the indication information of the data transmission scheme to the first UE, which may include but is not limited to: transmitting an Radio Resource Control (RRC) message to the first UE, where the RRC message includes the indication information; or transmitting a Downlink Control Information (DCI) message to the first UE, where the DCI message includes the indication information. The first UE receives the indication information of the data transmission scheme transmitted by the base station, which may include but is not limited to: receiving the RRC message transmitted by the base station, or receiving the DCI message transmitted by the base station.

In one example, if the available time-frequency resource includes a target Resource Block Group (RBG), which includes one or more first Physical Resource Blocks (PRBs) unoccupied by the SBFD time-frequency resource and one or more second PRBs occupied by the SBFD time-frequency resource, the base station may transmit a frequency-domain resource allocation message to the first UE, and the first UE receives the frequency-domain resource allocation message transmitted by the base station.

The frequency-domain resource allocation message includes first indication information and second indication information, where the first indication information is configured to indicate an index of the target RBG, the second indication information is configured to indicate a number of the first PRBs in the target RBG or a number of the second PRBs in the target RBG, so that the first UE determines the available time-frequency resource based on the first indication information and the second indication information. For example, the first UE determines the available time-frequency resource based on the PDSCH time-frequency resource, the SBFD time-frequency resource, the first indication information, and the second indication information.

In one example, the first indication information includes a frequency-domain resource indication parameter configured to indicate at least one of: an index of a first RBG occupied by the SBFD time-frequency resource or an index of a last RBG occupied by the SBFD time-frequency resource, where the target RBG includes the first RBG and/or the last RBG.

The second indication information includes at least one of: a first PRB resource indication parameter or a second PRB resource indication parameter. The first PRB resource indication parameter is configured to indicate a number N of the first PRBs in the first RBG, and the N PRBs are adjacent to a PRB in a RBG unoccupied by the SBFD time-frequency resource. The second PRB resource indication parameter is configured to indicate a number M of the first PRBs in the last RBG, and the M PRBs are adjacent to a PRB in a RBG unoccupied by the SBFD time-frequency resource.

It can be seen from the above technical solutions that when the SBFD time-frequency resource overlaps with the PDSCH time-frequency resource, the base station can make full use of the PDSCH time-frequency resource to schedule the transmission of the UE; the UE can be informed of the PDSCH time-frequency resource, and SBFD time-frequency resource configuration and PDSCH time-frequency resource configuration can be effectively implemented. From the perspective of the entire system, it can increase cell coverage, reduce transmission delay, and increase UL transmission capacity. It can support data transmission of the TDD systems, improve resource utilization, improve network coverage and network capacity, increase UL transmission resource and cell coverage, reduce UL transmission delay and increase UL transmission capacity.

In one example of the present disclosure, a data transmission method is proposed, and the data transmission method can be applied to the base station, as illustrated in FIG. 2A, which is a schematic flowchart of a data transmission method. The method may include the following.

At step 211: a PUSCH (Physical Uplink Shared Channel) time-frequency resource corresponding to a first UE and a SBFD time-frequency resource corresponding to a second UE are determined; where the PUSCH time-frequency resource and the SBFD time-frequency resource are located in a same UL time slot or a same special time slot, and the SBFD time-frequency resource is instructed to be used for DL and/or a guard band. The SBFD time-frequency resource instructed to be used for DL may be a DL sub-band.

At step 212: if there is an overlapping resource between the PUSCH time-frequency resource and the SBFD time-frequency resource, an available time-frequency resource is determined based on the PUSCH time-frequency resource and the SBFD time-frequency resource; where the available time-frequency resource is a time-frequency resource in the PUSCH time-frequency resource except the overlapping resource.

At step 213: UL data corresponding to the first UE is received based on the available time-frequency resource; where the first UE is an HD UE that supports SBFD capability.

At step 214: DL data corresponding to the second UE is transmitted based on the SBFD time-frequency resource.

In one example, if the SBFD time-frequency resource is instructed to be used for DL, the base station can transmit DL data based on the SBFD time-frequency resource. If the SBFD time-frequency resource is instructed to be used for a guard band, the base station does not transmit the DL data based on the SBFD time-frequency resource. If the SBFD time-frequency resource is instructed to be used for both DL and a guard band, the base station can transmit the DL data based on the resource instructed to be used for DL.

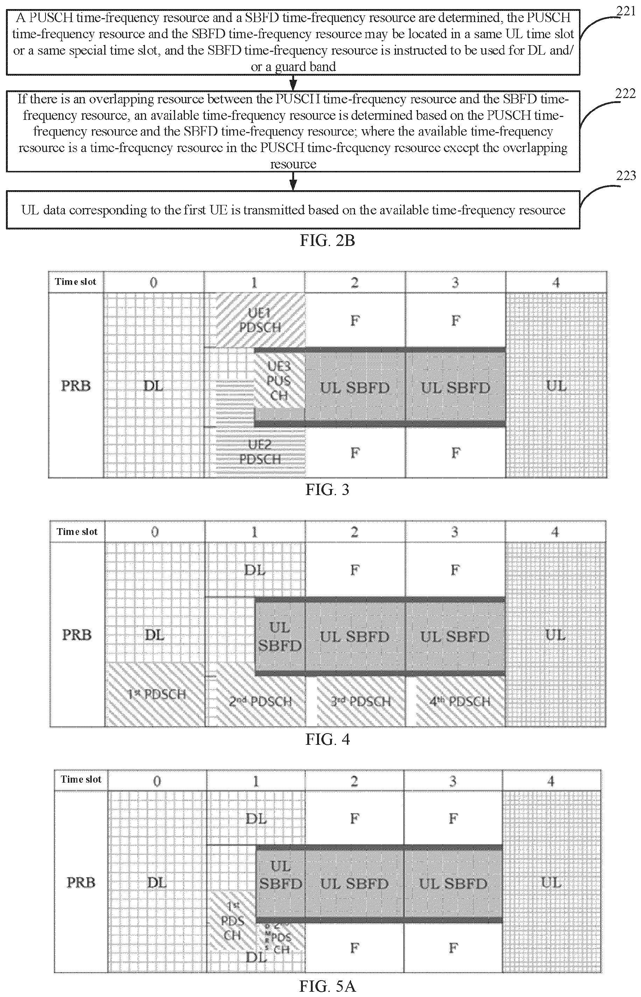

In one example of the present disclosure, a data transmission method is proposed, and the data transmission method may be applied to the first UE which is an HD UE supporting SBFD capability, as illustrated in FIG. 2B, which is a schematic flowchart of a data transmission method. The method may include the following.

At step 221: a PUSCH time-frequency resource (i.e., the PUSCH time-frequency resource of the first UE) and a SBFD time-frequency resource are determined, the PUSCH time-frequency resource and the SBFD time-frequency resource may be located in a same UL time slot or a same special time slot, and the SBFD time-frequency resource is instructed to be used for DL and/or a guard band.

At step 222: if there is an overlapping resource between the PUSCH time-frequency resource and the SBFD time-frequency resource, an available time-frequency resource is determined based on the PUSCH time-frequency resource and the SBFD time-frequency resource; where the available time-frequency resource is a time-frequency resource in the PUSCH time-frequency resource except the overlapping resource.

At step 223: UL data corresponding to the first UE is transmitted based on the available time-frequency resource.

In one example, transmitting the UL data corresponding to the first UE based on the available time-frequency resource may include: determining a target TBS based on a size of the available time-frequency resource, and transmitting the UL data matching the target TBS on the available time-frequency resource; or, performing rate matching on the UL data corresponding to the first UE on the available time-frequency resource, and transmitting the rate matched UL data on the available time-frequency resource.

In one example, transmitting the rate matched UL data on the available time-frequency resource may include but is not limited in that: if an effective code rate corresponding to the rate matched UL data is less than a set effective code rate threshold, the rate matched UL data can be transmitted on the available time-frequency resource.

In one example, if the effective code rate corresponding to the rate matched UL data is not less than the set effective code rate threshold, transmitting the rate matched UL data on the available time-frequency resource is prohibited.

In one example, if the available time-frequency resource includes a target RBG and the target RBG includes one or more first PRBs unoccupied by the SBFD time-frequency resource and one or more second PRBs occupied by the SBFD time-frequency resource, the base station transmits a frequency-domain resource allocation message to the first UE, and the first UE receives the frequency-domain resource allocation message. The frequency-domain resource allocation message includes first indication information and second indication information, where the first indication information is configured to indicate an index of the target RBG, the second indication information is configured to indicate a number of the first PRBs in the target RBG or a number of the second PRBs in the target RBG, so that the first UE determines the available time-frequency resource based on the first indication information and the second indication information. For example, the first UE determines the available time-frequency resource based on the PUSCH time-frequency resource, the SBFD time-frequency resource, the first indication information, and the second indication information.

In one example, the first indication information includes a frequency-domain resource indication parameter configured to indicate at least one of: an index of a first RBG occupied by the SBFD time-frequency resource or an index of a last RBG occupied by the SBFD time-frequency resource, wherein the target RBG includes the first RBG and/or the last RBG.

The second indication information includes at least one of: a first PRB resource indication parameter or a second PRB resource indication parameter. The first PRB resource indication parameter is configured to indicate a number N of the first PRBs in the first RBG the N PRBs are adjacent to a PRB in a RBG unoccupied by the SBFD time-frequency resource. The second PRB resource indication parameter is configured to indicate a number M of the first PRBs in the last RBG, and the M PRBs are adjacent to a PRB in a RBG unoccupied by the SBFD time-frequency resource.

In one example, the PUSCH time-frequency resource is dynamically scheduled, or semi-persistently scheduled. The SBFD time-frequency resource is semi-statically configured, or dynamically configured.

It can be seen from the above technical solutions that when the SBFD time-frequency resource overlaps with the PUSCH time-frequency resource, the base station can make full use of the PUSCH time-frequency resource to schedule the transmission of the UE. The UE can learn the PUSCH time-frequency resource, and SBFD time-frequency resource configuration and PUSCH time-frequency resource configuration can be effectively implemented. From the perspective of the entire system, it can increase cell coverage, reduce transmission delay, and increase DL transmission capacity. It can support data transmission of the TDD systems, improve resource utilization, improve network coverage and network capacity, increase DL transmission resource and cell coverage, reduce DL transmission delay and increase DL transmission capacity.

The above technical solutions of the present disclosure will be described below with examples.

Under the TDD system, the frame structure can be divided into UL time slot(s), DL time slot(s) and special time slot(s) in terms of time slots, the symbols in a special time slot can be configured as UL symbol(s), DL symbol(s) and F symbol(s), and an F symbol can be used for UL, DL or a guard period (GP). UL data can be transmitted in UL time slot(s), or UL symbol(s) or F symbol(s) in special time slot(s). UL data cannot be transmitted in DL time slot(s), nor DL symbol(s) in special time slot(s). Similarly, DL data can be transmitted in DL time slot(s), or DL symbol(s) or F symbol(s) in special time slot(s). DL data cannot be transmitted in UL time slot(s), nor UL symbol(s) in special time slot(s). PDSCH transmission can only be carried out in DL time slot(s), and DL symbol(s) or F symbol(s) in special time slot(s), while PDSCH transmission cannot be carried out in UL time slot(s), nor UL symbol(s) in special time slot(s).

FD communication can be implemented by means of SBFD, i.e., the SBFD time-frequency resource can be configured in time-frequency resources (such as an UL time slot, a DL time slot, and a special time slot). Thus, at the same time, data in a different direction than that of other time-frequency resources can be transmitted on the SBFD time-frequency resource. For example, an SBFD time-frequency resource may be configured in a DL time slot, UL data may be transmitted by the SBFD time-frequency resource, so that the UL data is transmitted in the DL time slot. For another example, an SBFD time-frequency resource may be configured in a DL symbol of a special time slot, UL data may be transmitted on the SBFD time-frequency resource, so that the UL data is transmitted in the DL symbol of the special time slot. For another example, an SBFD time-frequency resource may be configured in a UL time slot, DL data may be transmitted by using the SBFD time-frequency resource, so that the DL data is transmitted in the UL time slot. For another example, an SBFD time-frequency resource may be configured in an UL symbol of a special time slot, DL data may be transmitted by the SBFD time-frequency resource, so that the DL data is transmitted in the UL symbol of the special time slot.

In one example, the SBFD time-frequency resource may be a time-frequency resource corresponding to a SBFD time slot or a SBFD symbol. The SBFD symbol may be defined as a symbol in which the base station and the UE may configure with an SBFD sub-band. The base station and the UE can perform FD communication on the SBFD sub-band of these SBFD symbols (referred to as an SBFD time-frequency resource). In other words, at least one of UL transmission or DL transmission may be carried out on the SBFD time-frequency resource. The SBFD time-frequency resource may be clearly indicated as UL, DL, or flexible. If an SBFD time-frequency resource is indicated as flexible, the UL or DL can be flexibly scheduled on the SBFD time-frequency resource. If an SBFD time-frequency resource is not clearly indicated, it means that the resource is flexible and can be used to transmit UL or DL data. The configuration of the SBFD time slot or SBFD symbol may include: which symbols in the DL time slot, UL time slot, and flexible time slot are used for SBFD transmission, as well as the period and starting point of implementation, etc. For the convenience of description, in the subsequent embodiments, the SBFD time-frequency resource is the time-frequency resource corresponding to the SBFD time slot, which is taken as an example for illustration.

In one example, the SBFD indicated as UL is referred to as UL-SBFD, i.e., the SBFD time-frequency resource is used for UL, and the SBFD instructed to be used for DL is referred to as DL-SBFD, i.e., the SBFD time-frequency resource is used for DL. In order to support FD communication, SBFD time-frequency resource may be configured semi-statically (such as by RRC signaling) or dynamically (such as by DCI).

SBFD time-frequency resources can be configured in DL symbols, F symbols and UL symbols. A symbol configured with an SBFD time-frequency resource is referred to as an SBFD symbol. A remaining symbol configured without the SBFD time-frequency resource is referred to as an ordinary symbol, i.e., non-SBFD symbols are referred to as ordinary symbols, such as UL symbol, DL symbol, F symbol, etc. SBFD can be configured in part of the symbols of a certain time slot, i.e., part of the symbols in a time slot are SBFD symbols, and the rest are ordinary symbols, so that the transmission of DL or UL data may span ordinary symbols or SBFD symbols.

In one example, for the UEs do not have SBFD capability, all SBFD configurations are to be ignored. For the UEs have the SBFD capability, this category of UEs can be divided into two types. One type is a half-duplex UE that supports the SBFD capability, i.e., it can transmit or receive data on the SBFD time-frequency resource, but it can only transmit or receive at the same time, and the UE can be referred to as an HD UE. The other is a full duplex UE that supports the SBFD capability, i.e., it can transmit and receive data simultaneously on SBFD time-frequency resource, and the UE can be referred to as an FD UE.

In one example, if the PDSCH time-frequency resource or the time-frequency resource for PDSCH repetition transmission spans SBFD symbol(s) and ordinary symbol(s), it is necessary to clarify the transmission mechanism of PDSCH on UL-SBFD symbol(s), i.e., to give techniques of scheduling PDSCH in UL-SBFD symbol(s). For example, according to the coincidence between the PDSCH time-frequency resource and the SBFD time-frequency resource, and the capability of the UE (whether supporting FD), the appropriate transmission policy is selected to perform the PDSCH transmission in the corresponding time-frequency resource, so that the base station and the UE can have a definite transmission mechanism to implement SBFD-based FD communication between the base station and the UE. By defining the transmission policy for PDSCH between the base station and the UE on SBFD time-frequency resource, effective PDSCH transmission can be implemented in the SBFD systems, so as to improve the entire performance of the communication system.

The SBFD time-frequency resource coinciding with the PDSCH time-frequency resource can be instructed to be used for UL and/or a guard band, and the SBFD time-frequency resource instructed to be used for UL is recorded as an UL-SBFD time-frequency resource, where the UL-SBFD time-frequency resource instructed to be used for UL may be an UL sub-band. The SBFD time-frequency resource instructed to be used for a guard band is recorded as the guard-band time-frequency resource, and for the convenience of description, the SBFD time-frequency resource instructed to be used for UL is subsequently taken as an example, i.e., UL-SBFD time-frequency resource. The UL-SBFD time-frequency resource in the subsequent process can be replaced with a guard-band time-frequency resource, or a UL-SBFD time-frequency resource and a guard-band time-frequency resource, and with the similar implementation principle.

In one example, the service data carried on the PDSCH time-frequency resource may include ordinary service data and DL public control information, and the DL public control information may include a SIB, a paging message, message B (MSG-B) in the 2-step random access process, random access message 2 (MSG2) in the 4-step random access process, random access message 4 (MSG4) in the 4-step random access process, etc. The PDSCH time-frequency resource may be a dynamically scheduling PDSCH time-frequency resource, or a semi-persistent scheduling (SPS) PDSCH time-frequency resource. The PDSCH time-frequency resource is configured to transmit PDSCH initial transmission data; or the PDSCH time-frequency resource is configured to transmit PDSCH retransmission data based on HARQ feedback; or the PDSCH time-frequency resource is configured to transmit PDSCH repetition transmission data.

The data transmission process based on an SBFD time-frequency resource will be descripted in conjunction with specific situation hereafter.

First, dynamically scheduling PDSCH time-frequency resource.

Dynamically (Dynamic) scheduling refers to scheduling PDSCH time-frequency resources (also including PDSCH time-frequency resources retransmitted based on HARQ) in real-time via DCI, and dynamically scheduled PDSCH time-frequency resources are used to transmit SIB system messages, paging messages, random access message 2 (MSG2) in the 4-step Random Access Channel (RACH) process, random access message 4 (MSG4) in the 4-step RACH process, message B (MSG-B) in the 2-step RACH process, and ordinary PDSCH data (i.e., ordinary service data).

For the PDSCH time-frequency resources used to transmit SIB system messages and paging messages, the dynamic scheduling is performed via DCI, and the transmission is performed in an initial BWP. Before a UE completes the initial access, the UE may not obtain UL-SBFD configuration (e.g., configuring UL-SBFD via RRC signaling), therefore, the SIB system messages and the paging messages are transmitted in accordance with the DCI scheduling policy, without considering the conflict between the PDSCH time-frequency resource and the UL-SBFD time-frequency resource, and the UE receives the SIB system messages and the paging messages according to the scheduling information in the DCI, i.e., the UE receives DL data carried on the PDSCH time-frequency resource.

When the UE completes the initial access and is in a connected state, due to the importance of an SIB system message and the requirement to transmit it all at once, when PDSCH time-frequency resource is used to transmit SIB system message, if the time-frequency resource except the UL-SBFD time-frequency resource is insufficient to transmit SIB system message, the SIB system message is not to be transmitted. Conversely, if the time-frequency resource except UL-SBFD time-frequency resource is sufficient to transmit SIB system message, the transmitting of SIB system message is scheduled normally. For a UE, the UE determines whether there is reception of an SIB system message via DCI, and if there is any UL transmission in the UL-SBFD time-frequency resource, the UE cancels the UL transmission and receives the SIB system message. The UE does not expect to receive UL transmission scheduled by DCI while receiving the SIB system message.

For the PDSCH time-frequency resource used to transmit MSG2, MSG4, and MSG-B, dynamic scheduling is performed via DCI, and the transmission is performed in the initial BWP. For a single UE, when the UE is in the random access process, the single UE cannot transmit UL data while receiving DL data. But from the perspective of the base station, it may transmit DL data to one UE while receiving UL data from another UE. Based on this, if the DL-SBFD time-frequency resource is sufficient for PDSCH time-frequency resource to transmit DL data, the transmission is carried out normally, otherwise, transmitting the PDSCH in the symbols coinciding with the UL-SBFD time-frequency resource is abandoned.

For ordinary PDSCH transmission, i.e., a PDSCH time-frequency resource used to transmit ordinary PDSCH data (i.e. ordinary service data), if there is no PUSCH, Physical Uplink Control Channel (PUCCH) nor sounding reference signal (SRS) transmission of a certain UE on the UL-SBFD time-frequency resource, the PDSCH transmission of the UE can be dynamically scheduled on the available time-frequency resource except the UL-SBFD time-frequency resource, i.e., DL data of the UE is transmitted via the PDSCH time-frequency resource. Otherwise, if there is PUSCH, PUCCH, or SRS transmission of a certain UE on the UL-SBFD time-frequency resource, any PDSCH transmission of the UE should not be dynamically scheduled on the UL-SBFD symbol, however, the PDSCH transmission of other UE(s) can be dynamically scheduled on the available time-frequency resource except the UL-SBFD time-frequency resource.

When PDSCH can be dynamically scheduled on the available time-frequency resource except UL-SBFD time-frequency resource, if the available time-frequency resource is sufficient for PDSCH transmission, PDSCH is scheduled normally; and if only part of PDSCH can be transmitted on the available time-frequency resource, the following schemes can be adopted.

Scheme 1: scheduling the PDSCH is abandoned, and scheduling is performed again when there is sufficient resource in the subsequent time slots.

Scheme 2: part of the PDSCH data is transmitted on the available time-frequency resource. In scheme 2, according to the size of the available time-frequency resource, the TBS that can actually transmit PDSCH data is calculated, then part of the PDSCH data is sent on the available time-frequency resource, i.e., the PDSCH data that matches the TBS, while the remaining PDSCH data is to be transmitted in the subsequent time slots.

It should be noted that during determining the available time-frequency resource, it is necessary to ensure that the demodulation reference signal (DMRS) of the PDSCH does not conflict with any UL-SBFD time-frequency resource on the available time-frequency resource, otherwise, abandoning transmitting the PDSCH data.

Scheme 3: rate matching is performed for the PDSCH data on the available time-frequency resource. In scheme 3, the base station allocates a time-frequency resource (a PDSCH time-frequency resource) for PDSCH data according to the actual data size, and informs the UE of the allocated time-frequency resource via DCI, and the base station performs PDSCH rate matching according to the actual available time-frequency resource during transmitting PDSCH data. The allocated time-frequency resource for PDSCH data can be greater than or equal to the actual available time-frequency resource. In the process of allocating the time-frequency resource for PDSCH data, it is necessary to ensure that any resource element (RE) of DMRS for PDSCH on the allocated time-frequency resource does not conflict with any UL-SBFD time-frequency resource, otherwise, the rate matching on the PDSCH data is not performed, and scheme 1 or scheme 2 is to be selected.

If the above condition is met, i.e., any RE of DMRS does not conflict, it is also necessary to determine whether an effective code rate of PDSCH data after performing rate matching on the available time-frequency resource meets the service requirements, for example, by determining whether the effective code rate is lower than an effective threshold set for the user. If the effective code rate is lower than the effective code rate threshold, the rate matching is performed normally, otherwise, it indicates that decoding may not be performed normally after the rate matching, abandoning the execution of the rate matching, and selecting between Scheme 1 and Scheme 2.

In the actual networking process, the effective code rate threshold can be set based on simulation or actual measurement results, and the specific value of the effective code rate threshold is not specified. The effective code rate can be calculated as shown in the following formula: CR_{Effec} = (TBS + CRC bits)/(Available RE * Qm * Layer). CRC bits include the overall CRC bits for the transport block (TB) and the check bits for each code block (CB). Available RE represents the number of all REs that can be used to transmit PDSCH data, which is obtained by removing REs occupied by DMRS, PTRS and other overhead from all REs and removing REs that cannot be used for PDSCH data from all REs, where the REs that cannot be used for the PDSCH data may be REs in UL-SBFD time-frequency resource, and can be obtained by the configuration of SBFD. Qm represents the modulation order used by PDSCH data, and Layer represents the number of transmission layers used by PDSCH data.

For the above three schemes of dynamically scheduling PDSCH time-frequency resources, the base station does not need to inform a UE which scheme is selected to transmit PDSCH data, and the UE can make its own judgment. Scheme 1 does not transmit the PDSCH data, thus, the base station does not need to transmit DCI to the UE, and the UE cannot blindly detect the DCI, i.e., there is no need to receive PDSCH data. In scheme 2 and scheme 3, the base station is to inform UE of the configuration (including time-frequency resource allocation, etc.,) of this PDSCH data transmission via DCI, and the UE can determine whether the PDSCH time-frequency resource coincides with the UL-SBFD time-frequency resource and then determine whether scheme 2 or scheme 3 is currently used. If the PDSCH time-frequency resource does not coincide with the UL-SBFD time-frequency resource, it indicates that scheme 2 is used, otherwise, if the PDSCH time-frequency resource coincides with the UL-SBFD time-frequency resource, it indicates scheme 3 is used.

Scheme 1 is a data transmission scheme that prohibits data transmission, and scheme 2 and scheme 3 are data transmission schemes that allow data transmission, i.e., scheme 2 or scheme 3 can be adopted when data transmission is allowed.

In one example, as illustrated in FIG. 3, it is a schematic diagram of dynamically scheduling PDSCH time-frequency resources. Time slot 0 and time slot 1 are DL time slots, and time slot 2 and time slot 3 are special time slots. The symbols of time slot 2 and time slot 3 are F symbols, and time slot 4 is a UL time slot. In time slot 1, time slot 2 and time slot 3, UL-SBFD time-frequency resources are configured, the black parts on both sides of the UL-SBFD time-frequency resource are the guard bands.

As illustrated in FIG. 3, the base station can determine the PDSCH time-frequency resource corresponding to UE1, the PDSCH time-frequency resource corresponding to UE 2, and the SBFD time-frequency resource corresponding to UE 3. The PDSCH time-frequency resource corresponding to UE1, the PDSCH time-frequency resource corresponding to UE 2, and the SBFD time-frequency resource corresponding to UE 3 can be located in the same DL time slot or the same special time slot, and the SBFD time-frequency resource is instructed to be used for UL, i.e., the UL-SBFD time-frequency resource.

In the UL-SBFD time-frequency resource, there is PUSCH data of UE 3 being transmitted, i.e., receiving UL data corresponding to UE 3 based on the UL-SBFD time-frequency, where UE 3 is the above-mentioned second UE, and the second UE can be an HD UE supporting SBFD capability. Therefore, except the UL-SBFD time-frequency resource, the PDSCH data of UE 3 can no longer be scheduled, however, at this time, the PDSCH data of UE 1 and PDSCH data of UE 2 can be scheduled on the SBFD symbol. UE 1 and UE 2 are the above-mentioned first UE, and the first UE can be an HD UE enabling SBFD capability.

For UE1, a corresponding PDSCH time-frequency resource is sufficient to transmit its PDSCH data, and the PDSCH data of UE1 is transmitted normally. For example, since there isn't any overlapping resource between the PDSCH time-frequency resource and the UL-SBFD time-frequency resource, i.e., the PDSCH time-frequency resource is sufficient to transmit the PDSCH data, the base station can transmit DL data corresponding to UE 1 based on the PDSCH time-frequency resource, and UE1 can receive the DL data normally.

For UE2, a corresponding PDSCH time-frequency resource is not sufficient to transmit its PDSCH data. It can be seen from the allocated resource as illustrated in FIG. 3 that, UE 2 occupies a frequency-domain resource which coincide with the UL-SBFD time-frequency resource, and the PDSCH data of UE2 cannot be transmitted normally. For example, if there is the overlapping resource between the PDSCH time-frequency resource and the UL-SBFD time-frequency resource, scheme 1 is adopted for processing, i.e., the base station prohibits transmitting DL data (i.e., PDSCH data) corresponding to UE 2 based on the PDSCH time-frequency resource, and UE 2 is not to receive the DL data. For another example, if there is the overlapping resource between the PDSCH time-frequency resource and the UL-SBFD time-frequency resource, scheme 2 is adopted for processing, i.e., the base station determines an available time-frequency resource based on the PDSCH time-frequency resource and the UL-SBFD time-frequency resource, where the available time-frequency resource is the time-frequency resource in the PDSCH time-frequency resource except the overlapping resource, determines a target TBS based on the available time-frequency resource, and transmits DL data that matches the target TBS (DL data corresponding to UE2) on the available time-frequency resource. Then UE 2 receives the DL data via the available time-frequency resource. For another example, if there is the overlapping resource between the PDSCH time-frequency resource and the UL-SBFD time-frequency resource, scheme 3 is adopted for processing, i.e., the base station determines an available time-frequency resource based on the PDSCH time-frequency resource and the UL-SBFD time-frequency resource, where the available time-frequency resource is the time-frequency resource in the PDSCH time-frequency resource except the overlapping resource, performs rate matching for DL data corresponding to UE2 on the available time-frequency resource, and transmits the rate matched DL data on the available time-frequency resource. UE 2 can receive the rate matched DL data via the available time-frequency resource. In scheme 3, if an effective code rate corresponding to the rate matched DL data is less than a set effective code rate threshold, the rate matched DL data can be transmitted on the available time-frequency resource. If the effective code rate corresponding to the rate matched DL data is not less than the set effective code rate threshold, transmitting the rate matched DL data on the available time-frequency resource is prohibited.

In one example, since all frequency-domain resource occupy the same time-domain resource in the current UE resource allocation scheme, the PDSCH data transmission of UE 2 can adopt scheme 3, i.e., the rate matching scheme.

Second, the SPS PDSCH time-frequency resource.

Semi-persistently scheduling (SPS) refers to using the semi-static RRC to configure the configuration information (such as a transmission period, etc.,) of a PDSCH time-frequency resource, then using DCI to activate and transmit resource allocation information. PDSCH time-frequency resources based on SPS are only used for transmitting ordinary PDSCH data (i.e., ordinary service data, i.e., DL data), not for transmitting SIB system messages, paging messages, and messages in the random access process.

For ordinary PDSCH transmission, i.e., for the PDSCH time-frequency resource used to transmit ordinary PDSCH data (i.e. ordinary service data), if there is no PUSCH, PUCCH nor SRS transmission of a certain UE on the UL-SBFD time-frequency resource, the SPS PDSCH transmission of the UE can be transmitted on the available time-frequency resource except the UL-SBFD time-frequency resource (i.e., the SPS PDSCH time-frequency resource), that is, DL data of the UE is transmitted via the PDSCH time-frequency resource. Otherwise, if there is PUSCH, PUCCH, or SRS transmission of a certain UE on the UL-SBFD time-frequency resource, any PDSCH transmission of the UE should not be transmitted on the UL-SBFD symbol, however, the PDSCH transmission of other UE(s) can be scheduled on the available time-frequency resource except the UL-SBFD time-frequency resource.

When SPS PDSCH transmission can be scheduled on the available time-frequency resource except the UL-SBFD time-frequency resource, if the available time-frequency resource is sufficient for PDSCH transmission, the SPS PDSCH is scheduled normally; and if only part of PDSCH can be transmitted on the available time-frequency resource, the following schemes can be adopted:

Scheme I: transmitting SPS PDSCH data is abandoned this time. In the transmission process, the base station and UE both can determine whether the time-frequency resources of SPS PDSCH are all located on the time-frequency resources except UL-SBFD time-frequency resources, if not, the base station gives up transmitting the SPS PDSCH data, and UE does not receive the SPS PDSCH data in the time-frequency resource, however, UE returns NACK to the base station, and in the subsequent process, the base station is to use DCI to schedule the retransmission of the SPS PDSCH data.

Scheme II: rate matching is performed for the SPS PDSCH data on the available time-frequency resource. In scheme II, the base station allocates the time-frequency resource (i.e., the PDSCH time-frequency resource) for PDSCH data according to the actual data size, and informs the allocated time-frequency resource to the UE via DCI in the SPS activation process. The base station performs SPS PDSCH rate matching according to the actual available time-frequency resource in the process of transmitting PDSCH data.

The time-frequency resource allocated for the PDSCH data can be greater than or equal to the actual available time-frequency resource. In the SPS PDSCH data transmission process, if any RE of the DMRS for the SPS PDSCH on the allocated time-frequency resource conflicts with any UL-SBFD time-frequency resource, the rate matching of the SPS PDSCH data cannot be performed, and scheme I can be selected to transmit the SPS PDSCH data.

If the above condition is met, i.e., any RE of DMRS does not conflict, it is also necessary to determine whether an effective code rate of the SPS PDSCH data after performing rate matching on the available time-frequency resource meets the business requirements, for example, by determining whether the effective code rate is lower than the effective threshold set for the user. If the effective code rate is lower than the effective code rate threshold, the rate matching is performed normally, otherwise, it indicates that decoding may not be performed normally after the rate matching, the execution of the rate matching is abandoned, and scheme I is selected, i.e., the SPS transmission this time is abandoned. The calculation process of the effective code rate can refer to the above example, which will not be repetitive here.

For UEs, a UE normally receives SPS PDSCH data (i.e., the SPS PDSCH data after rate matching) on the available time-frequency resource, and decodes it. If the UE cannot decode correctly, the UE can also return NACK to the base station, and the base station is to schedule the retransmission of the SPS using DCI.

For the above two schemes of SPS PDSCH time-frequency resource, the base station needs to clearly inform the UE which scheme to be adopt, so that the UE can receive it correctly. This can be done, for example, by introducing signaling into the RRC configuration message of the SPS, or by indicating via DCI when the SPS configuration is activated. If the RRC message is used for indication, a parameter spsRmUlSbfd can be introduced into SPS-Config. If the parameter is configured to enabled, it indicates that scheme II is adopted; and if the parameter is not configured, it indicates that scheme I is adopted. An example of introducing the parameter spsRmUlSbfd into SPS-Config is as follows:

```
SPS-Config ::= SEQUENCE{
  ......,
spsRmUlSbfd ENUMERATED {enabled} OPTIONAL,
......,
}
```

If the DCI is used for indication, a parameter pdschRmUlSbfd can be additionally introduced into the DCI, where the size of pdschRmUlSbfd is 1 bit. If pdschRmUlSbfd is configured as 1, it means that the rate matching scheme is adopted, i.e., scheme II is adopted, and if pdschRmUlSbfd is configured as 0, it means that the transmission of PDSCH data is abandoned, i.e., scheme I is adopted. When a UE receives the SPS activation message, the parameter pdschRmUlSbfd is decoded from the DCI to determine which scheme is to be adopted based on the value of pdschRmUlSbfd.

Scheme I is a data transmission scheme that prohibits data transmission, and scheme II is a data transmission scheme that allows data transmission. The base station may transmit an RRC message to the UE, and the RRC message includes instruction information of the data transmission scheme, such as the parameter spsRmUlSbfd, indicating, and the data transmission scheme is allowed for data transmission (i.e., scheme II) or prohibited for data transmission (i.e., scheme I) by the indication information. Or, the base station may transmit a DCI message to the UE, the DCI message includes an indication information of the data transmission scheme, such as the parameter pdschRmUlSbfd, and the data transmission scheme is allowed for data transmission (i.e., scheme II), or prohibited for data transmission (i.e., scheme I) by the indication information.

One example is the schematic diagram of SPS PDSCH time-frequency resource, as illustrated in FIG. 3. The PDSCH time-frequency resource corresponding to UE1, the PDSCH time-frequency resource corresponding to UE 2, and the SBFD time-frequency resource corresponding to UE3 can be located in the same DL time slot or the same special time slot, and the SBFD time-frequency resource is instructed to be used for UL, i.e., the UL-SBFD time-frequency resource. The base station receives UL data corresponding to UE 3 based on the UL-SBFD time-frequency resource, and cannot schedule the PDSCH data of UE 3 except the UL-SBFD time-frequency resource, however, the PDSCH data of UE 1 and the PDSCH data of UE 2 can be scheduled on the SBFD symbol.

For UE1, since there isn't any overlapping resource between a corresponding PDSCH time-frequency resource and the UL-SBFD time-frequency resource, i.e., the PDSCH time-frequency resource is sufficient to transmit its PDSCH data, the base station can transmit DL data corresponding to UE 1 based on the PDSCH time-frequency resource, and UE1 can receive the DL data normally.

For UE2, there is an overlapping resource between a corresponding PDSCH time-frequency resource and the UL-SBFD time-frequency resource, then scheme I can be adopted for processing, i.e., the base station prohibits transmitting DL data corresponding to UE2 based on the PDSCH time-frequency resource, and UE2 is not to receive DL data. Or, scheme II can be adopted for processing, i.e., an available time-frequency resource is determined based on the PDSCH time-frequency resource and the UL-SBFD time-frequency resource, where the available time-frequency resource is the time-frequency resource in the PDSCH time-frequency resource except the overlapping resource, rate matching on DL data corresponding to UE2 is performed on the available time-frequency resource, and the rate matched DL data is transmitted on the available time-frequency resource; then UE 2 can receive the rate matched DL data via the available time-frequency resource.

Third, PDSCH repetition transmission data.

For the dynamically scheduling PDSCH time-frequency resource and the semi-persistently scheduling PDSCH time-frequency resource, PDSCH initial transmission data can be transmitted, and PDSCH repetition transmission data can also be transmitted. PDSCH repetition transmission data includes PDSCH repetition transmission data (a PDSCH time-frequency resource is used for transmitting the PDSCH repetition transmission data) configured by RRC and HARQ retransmission data (a PDSCH time-frequency resource is used for transmitting PDSCH retransmission data based on HARQ feedback). The PDSCH repetition transmission data configured by the RRC includes each time of PDSCH transmitted data, which is divided into: repetition transmission data between time slots (inter-slot), and repetition transmission data within a time slot (intra-slot).

If there is no PUSCH, PUCCH nor SRS transmission of a certain UE on the UL-SBFD time-frequency resource, the PDSCH repetition transmission data of the UE can be transmitted on the available time-frequency resource except the UL-SBFD time-frequency resource, i.e., the PDSCH repetition transmission data (repetition transmission DL data) of the UE can be transmitted via the PDSCH time-frequency resource. Otherwise, if there is PUSCH, PUCCH, or SRS transmission of a certain UE on the UL-SBFD time-frequency resource, any PDSCH repetition transmission data of the UE should not be transmitted on the UL-SBFD symbol, however, PDSCH repetition transmission data of other UE(s) can be scheduled on the available time-frequency resource except the UL-SBFD time-frequency resource.

HARQ retransmission data and inter-slot repetition transmission data for PDSCH.

In one example, the HARQ retransmission data of PDSCH can be scheduled by DCI, and a TBS of the HARQ retransmission data is the same as the PDSCH initial transmission data, and the TBS cannot be recalculated during the retransmission. A TBS and time-frequency resource of inter-slot repetition transmission data for PDSCH are allocated by DCI at the time of activation, and all subsequent PDSCH transmission data is transmitted according to the TBS and the time-frequency resource.

When inter-slot repetition transmission data can be scheduled on the available time-frequency resource except the UL-SBFD time-frequency resource, if the available time-frequency resource is sufficient for all repetition transmission data of PDSCH, the inter-slot repetition transmission data or the HARQ retransmission data is normally scheduled. If only part of the repetition transmission data for a certain PDSCH can be transmitted on this available time-frequency resource, the following options can be adopted.

Option 1: transmitting the inter-slot repetition transmission data or the HARQ retransmission data this time is abandoned.

Option 2: rate matching is performed for the inter-slot repetition transmission data or the HARQ retransmission data on the available time-frequency resource. Whether it is the inter-slot repetition transmission data or the HARQ retransmission data, the base station allocates the time-frequency resource (i.e., the PDSCH time-frequency resource) for PDSCH data according to an actual size of the PDSCH data. In option 2, the base station can perform PDSCH rate matching according to the actual available time-frequency resource in the process of transmitting the inter-slot repetition transmission data or the HARQ retransmission data.

The time-frequency resource allocated for PDSCH data can be greater than or equal to the actual available time-frequency resource. In the process of transmitting the inter-slot repetition transmission data or the HARQ retransmission data, if any RE of the DMRS for PDSCH on the allocated time-frequency resource conflicts with any UL-SBFD time-frequency resource, the rate matching of PDSCH data cannot be performed, and option 1 is selected to transmit PDSCH data, i.e., the transmission of the inter-slot repetition transmission data or the HARQ retransmission data this time is gave up.

If the above condition is met, i.e., any RE of DMRS does not conflict, it is also necessary to determine whether an effective code rate of PDSCH data after performing rate matching on the available time-frequency resource meets the business requirements, for example, by determining whether the effective code rate is lower than the effective threshold set for the user. If the effective code rate is lower than the effective code rate threshold, the rate matching is performed normally, otherwise, it indicates that after the rate matching decoding may not be performed normally, abandoning the execution of the rate matching, and option 1 is selected, i.e., the transmission the inter-slot repetition transmission data or the HARQ retransmission data this time is abandoned.

For the above two options, the base station needs to inform the UE which option is selected, so that the UE can receive correctly. For example, this can be done by introducing signaling into the RRC configuration message, or indicated via DCI scheduling the inter-slot repetition transmission data or the HARQ retransmission data. If this is indicated by RRC configuration messages, a parameter pdschAggregationRmUlSbfd can be introduced, and the parameter is only configured when configuring pdsch-AggregationFactor. If the parameter is configured as enabled, it indicates option 2 is adopted; and if the parameter is not configured, it indicates option 1 is adopted. If this is indicated by DCI, a parameter pdschRmUlSbfd in DCI can be reused. When the UE receives the DCI message to schedule the inter-slot repetition transmission data or the HARQ retransmission data, the UE can decode the parameter from the DCI to determine which scheme is to be adopt based on the value of the parameter.

Option 1 is a data transmission scheme prohibited for data transmission, and option 2 is a data transmission scheme allowed for data transmission, i.e., option 2 is adopted to transmit the transmission of the inter-slot repetition transmission data or the HARQ retransmission data this time.

As illustrated in FIG. 4, one example is a schematic diagram of inter-slot repetition transmission data, where the black parts on both sides of UL-SBFD time-frequency resource are the guard bands. In FIG. 4, PDSCH repetition transmission is configured four times, i.e., it is necessary to transmit inter-slot repetition transmission data four times. Time slot #0 is used to transmit first inter-slot repetition transmission data, time slot #1 is used to transmit second inter-slot repetition transmission data, time slot #2 is used to transmit third inter-slot repetition transmission data, and time slot #3 is used to transmit fourth inter-slot repetition transmission data.

In time slot #0, since there isn't any UL-SBFD time-frequency resource, the first inter-slot repetition transmission data can be transmitted normally in time slot #0. In time slot #1-#3, due to the presence of UL-SBFD time-frequency resources, only part of the inter-slot repetition transmission data is transmitted outside the UL-SBFD time-frequency resource while the remaining inter-slot repetition transmission data is discarded. It can be noted that more inter-slot repetition transmission data is transmitted in time slot #1 than that in time slot #2 and time slot #3, this is because the UL-SBFD time-frequency resource in slot #1 only occupies the time-domain resource of the second half of the time slot. Or, in time slot #1-#3, rate matching can be performed on the inter-slot repetition transmission data.

In one example, as illustrated in FIG. 4, a UE (such as an HD UE that supports SBFD capability) corresponds to the four times of inter-slot repetition transmission data. For first inter-slot repetition transmission data, the base station can transmit the first inter-slot repetition transmission data normally in time slot #0. For the second inter-slot repetition transmission data, the base station can transmit the second inter-slot repetition transmission data in time slot #1. The base station receives UL data of another UE based on the UL-SBFD time-frequency resource and schedules the second inter-slot repetition transmission data of the UE. Since there is an overlapping resource between the PDSCH time-frequency resource and the UL-SBFD time-frequency resource, option 1 can be adopted for processing, i.e., the base station prohibits transmitting the second inter-slot repetition transmission data based on the PDSCH time-frequency resource; or, option 2 can be adopted for processing, i.e., an available time-frequency resource is determined based on the PDSCH time-frequency resource and the UL-SBFD time-frequency resource, where the available time-frequency resource is the time-frequency resource in the PDSCH time-frequency resource except the overlapping resource, rate matching is performed for the second inter-slot repetition transmission data on the available time-frequency resource, and the rate matched second time of the inter-slot repetition transmission data is transmitted on the available time-frequency resource. The UE receives the rate matched second inter-slot repetition transmission data based on the available time-frequency resource.

For the third inter-slot repetition transmission data, the base station transmits the third inter-slot repetition transmission data in time slot #2. For the fourth inter-slot repetition transmission data, the base station transmits the fourth inter-slot repetition transmission data in time slot #3, and the transmission process refers to the second inter-slot repetition transmission data.

Intra-slot repetition transmission data for PDSCH.

For intra-slot repetition transmission data, the frequency of transmitting the repetition transmission data in a certain time slot is supported up to twice, and transmitting the repetition transmission data twice uses the same size of the frequency-domain resource and have the same number of time-domain symbols, and the allocated time-frequency resource and the corresponding transmission configuration indicator (TCI) of transmitting the repetition transmission data each time can be notified to the UE via DCI. The intra-slot repetition transmission data corresponds to three transmission mechanisms, which are: time division multiplexing scheme A (TDMSchemeA), frequency division multiplexing (FDM) scheme A (FDMSchemeA) and FDM scheme B (FDMSchemeB). For TDMSchemeA, transmitting the repetition transmission data twice uses the same size of the frequency-domain resource and have the same number of time-domain symbols, but the interval on the time-domain is configured by high-level signaling. For FDMSchemeA and FDMSchemeB, transmitting the repetition transmission data twice uses the same time-domain resource, have the same size of frequency-domain resource, but do not have the same frequency-domain location. Depending on the different configuration of a precoding resource group (PRG), the allocation way of the frequency-domain resource varies. When the PRG is wideband, the first half of the frequency-domain resource is allocated to the first repetition transmission data (corresponding to state 1 of TCI), and the other half is allocated to the second repetition transmission data (corresponding to state 2 of TCI). When the PRG is 2 or 4, an even number of PRGs in the frequency-domain resource is allocated to the first repetition transmission data, and an odd number of PRGs is allocated to the second repetition transmission data. The difference between the two FDM transmission mechanisms is that the RV version of the twice transmissions are different.

When intra-slot repetition transmission data can be scheduled on the available time-frequency resource except UL-SBFD time-frequency resource, if the time-frequency resource allocated for the intra-slot repetition transmission data do not coincide with the UL-SBFD time-frequency resource, all of the intra-slot repetition transmission data can be scheduled normally. If the time-frequency resource allocated for the intra-slot repetition transmission data any time coincide with the UL-SBFD time-frequency resource, the following options can be adopted:

Option I: transmitting the intra-slot repetition transmission data with coincidence is abandoned.

Option II: rate matching is performed for the intra-slot repetition transmission data on the un-coincided time-frequency resource. In the process of transmitting the intra-slot repetition transmission data, the base station performs PDSCH rate matching based on the actual available time-frequency resource. The time-frequency resource allocated for PDSCH data can be greater than or equal to the actual available time-frequency resource. In the process of transmitting the intra-slot repetition transmission data, if any RE of the DMRS for PDSCH conflicts with any UL-SBFD time-frequency resource on the allocated time-frequency resource, the rate matching of PDSCH data cannot be performed, and option I is selected, i.e., transmitting the intra-slot repetition transmission data is abandoned.

If the above condition is met, i.e., any RE of DMRS does not conflict, it is also necessary to determine whether the effective code rate of PDSCH data after performing rate matching on the available time-frequency resource meets the service requirement, for example, by determining whether the effective code rate is lower than the effective threshold set for the user. If the effective code rate is lower than the effective code rate threshold, the rate matching is performed normally; otherwise, if the effective code rate is not lower than the effective code rate threshold, it indicates that decoding may not be performed normally after the rate matching, the execution of the rate matching is abandoned, and option I is selected.

As illustrated in FIG. 5A, one example is a schematic diagram of TDMSchemeA, an intra-slot repetition transmission mechanism, where there is partially coincidence. In the second the transmission process, i.e., transmitting the second intra-slot repetition transmission data, the entire time-domain resource of PDSCH coincides with the UL-SBFD time-frequency resource, so only option I can be adopted to abandon transmitting the second intra-slot repetition transmission data.

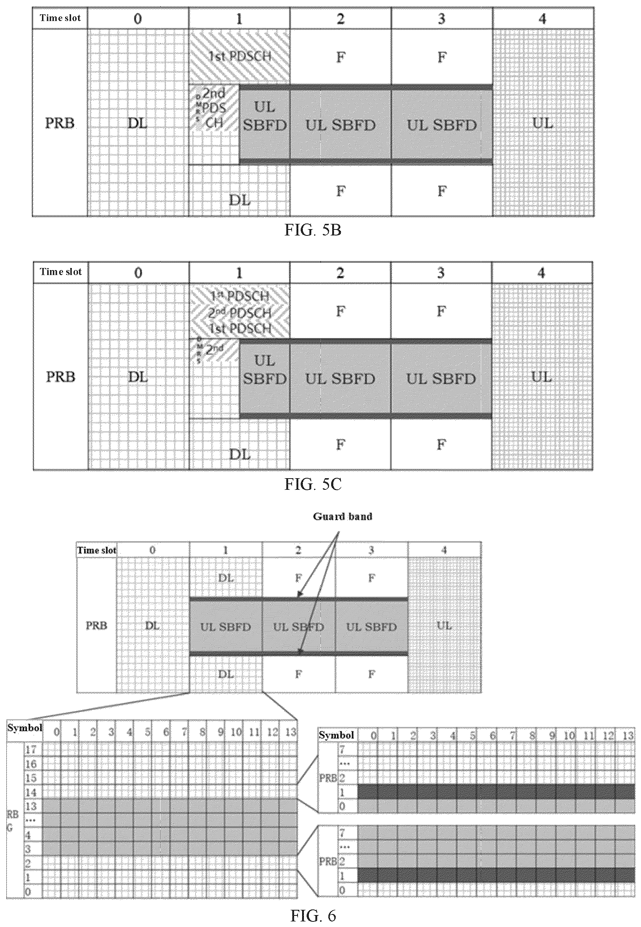

As illustrated in FIG. 5B, one example is a schematic diagram of intra-slot FDM repetition transmission mechanism, where PRG=wideband. As illustrated in FIG. 5C, one example is a schematic diagram of intra-slot FDM repetition transmission mechanism, where PRG=2 or 4. There is partially coincidence in these cases. In the second transmission process, i.e., transmitting the second intra-slot repetition transmission data, a PDSCH time-domain resource coincides with an UL-SBFD time-frequency resource, unlike FIG. 5A, although there is partially coincidence, DMRS does not coincide with UL-SBFD time-frequency resource, therefore, the second intra-slot repetition transmission data can be transmitted by performing rate matching for the PDSCH data on the available time-frequency resource, i.e., option II can be adopted.

As illustrated in FIG. 5B and FIG. 5C, the UE (e.g., an HD UE enabling SBFD capability) correspond to two intra-slot repetition transmission data. For the first intra-slot repetition transmission data, the base station can transmit the first intra-slot repetition transmission data normally, and the UE can normally receive the first intra-slot repetition transmission data.

For the second intra-slot repetition transmission data, because there is an overlapping resource between the PDSCH time-frequency resource and the UL-SBFD time-frequency resource, option I can be adopted for processing, i.e., the base station prohibits transmitting the second intra-slot repetition transmission data based on the PDSCH time-frequency resource; or, option II can be adopted for processing, i.e., an available time-frequency resource is determined based on PDSCH time-frequency resource and UL-SBFD time-frequency resource, where the available time-frequency resource is time-frequency resource except overlapping resource in PDSCH time-frequency resource, rate matching on the second inter-slot repetition transmission data is performed on the available time-frequency resource, and the rate matched second intra-slot repetition transmission data is transmitted on the available time-frequency resource. The UE receives the rate matched second intra-slot repetition transmission data via the available time-frequency resource.

For all the above intra-slot repetition transmission types, mechanisms, and different situations in each mechanism, once it appears the case that the time-frequency resources occupied by PDSCH repetition transmission data coincide with UL-SBFD time-frequency resources, it is necessary to clarify which option the base station adopts in this case, so that the UE may also adopt the same option for receiving. This can be done by introducing signaling into the RRC configuration message, or indicated via DCI. If this is indicated by RRC messages, the parameter repetitionRmWithSbfd can be additionally introduced when configuring a repetition transmission parameter, which is optional and configured only when RepetitionSchemeConfig is configured. If the parameter is not configured, option I is selected by default, i.e., transmitting the PDSCH repetition transmission data is gave up; conversely, if the parameter is configured, it indicates option II is selected, i.e., the PDSCH repetition transmission data is transmitted. If this is indicated by DCI, the parameter pdschRmUlSbfd in DCI is reused.

Option I is a data transmission scheme prohibited for data transmission, and option II is a data transmission scheme allowed for data transmission. The base station can transmit RRC messages to the UE, and the RRC messages include indication information (such as the parameter repetitionRmWithUlSbfd) for the data transmission scheme, where the indication information indicates that the data transmission scheme is allowed for data transmission (option II), or prohibited for data transmission (option I). Or, the base station can transmit DCI messages to the UE, and the DCI messages include indication information (such as the parameter pdschRmUlSbfd) for the data transmission scheme, where the indication information indicates that the data transmission scheme is allowed for data transmission (option II), or prohibited for data transmission (option I).

Fourth, PDSCH frequency-domain resource allocation.

UL-SBFD time-frequency resources are in units of PRB, and the location of UL-SBFD time-frequency resources are two types: UL-SBFD time-frequency resources are located at one end of the entire bandwidth, or UL-SBFD time-frequency resources are located in the middle of the entire bandwidth, as illustrated in FIG. 3 - FIG. 4, FIG. 5A - FIG. 5C, which the UL-SBFD time-frequency resources located in the middle of the entire bandwidth are taken as an example, where the black parts on both sides of the UL-SBFD time-frequency resource are the guard bands, and the guard bands cannot be used for any UL or DL transmission.

For PDSCH frequency-domain resource allocation (FDRA), FDRA type 0 (FDRATO) and FDRA type 1 (FDRAT1) can be adopted, where FDRATO supports non-consecutive resource allocation, and FDRAT1 supports consecutive resource allocation. For FDRATO, the resource allocation unit is an RBG, the minimum RBG is 2 PRBs, and the maximum RBG is 16 PRBs. In addition, except for the first RBG and the last RBG in the BWP, the rest of the RBGs require each entire RBG to be scheduled as a unit.

When a UL-SBFD time-frequency resource only occupies part of a PRB of an RBG, if the RBG cannot be used to transmit PDSCH data, the band utilization will be reduced. As illustrated in FIG. 6, which is a schematic diagram of PDSCH frequency-domain resource allocation, PDSCH frequency domain resource allocation can adopt FDRATO, and an RBG size can be 8 PRBs. In RBG #2, a total of 7 PRBs are configured as the UL-SBFD time-frequency resource, and in RBG #14, a total of 2 PRBs are configured as the UL-SBFD time-frequency resource, therefore, a total of 7 PRBs in RBG#2 and RBG#14 cannot be used for PDSCH data transmission, thereby reducing band utilization.

In order to improve the frequency band utilization, such that PRBs in some RBGs that are not used by the UL-SBFD time-frequency resource are able to transmit DL data, such as PRB#0 in RBG2, PRB#2-7 in RBG14 as illustrated in FIG. 6, a PRB resource indication parameter, such as PRB resource assignment, is additionally introduced besides the frequency-domain resource indication parameter, Frequency domain resource assignment, in DCI format 1-1 and DCI format 1-2. Considering that UL-SBFD time-frequency resource may be configured to a maximum of one and configured in the middle location of the bandwidth, and partial PRBs in two RBGs may not be occupied by the UL-SBFD time-frequency resource, the PRB resource indication parameters are configured to a maximum of two, where the two PRB resource indication parameters are referred to as PRB resource assignment0 and PRB resource assignment1.

For example, if the UL-SBFD time-frequency resource is configured on the upper side of the bandwidth or the lower side of the bandwidth, the PRB resource indication parameter only use PRB resource assignment0; and if the UL-SBFD time-frequency resource is configured in the middle of the bandwidth, the PRB resource indication parameters are PRB resource assignment0 and PRB resource assignment1. PRB resource assignment0 corresponds to the RBG with a low index (i.e., the first RBG occupied by the UL-SBFD time-frequency resource), in which partial PRB resources are used for the UL-SBFD time-frequency resource, and PRB resource assignment1 corresponds to the RBG with a high index (i.e., the last RBG occupied by the UL-SBFD time-frequency resource), in which partial PRB resources are used for the UL-SBFD time-frequency resource. If the UL-SBFD time-frequency resource is relatively small and occupies only one RBG, then resource assignment0 is used by default. As illustrated in Figure 6, PRB resource assignment0 corresponds to RGB2, PRB resource assignment1 corresponds to RBG14, the two parameters have the same basic configuration, and the parameter values can be set according to the actual scheduling.

In one example, a PRB resource indication parameter takes effect and is used only when the FDRA is configured to FDRATO. If the FDRA is configured to use a DynamicSwitch mode by higher-level signaling, it is judged according to the value of the MSB in the Frequency-domain resource assignment. If the value of the MSB is 0, it indicates that FDRATO is used, and the new parameter is to be effective and used. If the value of the MSB is 1, it indicates that FDRAT1 is used, and the size of the new parameter is 0 bit, indicating that it is not used.

The number of bits occupied by the PRB resource indication parameter is determined based on the FDRA type and the RBG size. If FDRAT1 is used, the PRB resource indication parameter occupies 0 bit, and if FDRATO is used, the number of bits occupied by the PRB resource indication parameter is log2 (RBG size). The bit size of the PRB resource indication parameter is determined according to Table 1, where Table 1 indicates the number of bits occupied by the PRB resource indication parameter. For example, both PRB resource assignment0 and PRB resource assignment1 for FIG. 6 have a size of 3.

**Table1**

| Frequency-domain resource allocation type | RBG size | Number of bits occupied by the PRB resource indication parameter |
|---|---|---|
| FDRAT1 | - | 0 |
| FDRAT0 | 2 | 1 |
| | 4 | 2 |
| | 8 | 3 |
| | 16 | 4 |

Before introducing PRB resource indication parameter(s), except for the first and last RBG in the BWP, a RBG having partial available PRBs cannot be used for PDSCH data transmission. After introducing the PRB resource indication parameter(s), the RBG having partial available PRBs can be used for PDSCH data transmission, where the bit value corresponding to the RBG is set to 1 in the Frequency domain resource assignment. Taking FIG. 6 as an example, if it is configured to use FDRATO, the value of Frequency domain resource assignment is 110000000000000111 before introducing the PRB resource indication parameter, the value of Frequency domain resource assignment is 111000000000001111 after introducing the PRB resource indication parameter, and the locations of RBG2 and RBG14 change from 0 to 1, i.e., the PRB resource indication parameter is introduced for RBG2 and RBG14.

A value of a PRB resource indication parameter indicates the number of continuous PRBs that are available for PDSCH data in the RBG, and the available PRB(s) in the RBG are contiguous to a PRB in the previous RBG or in the next RBG. For example, PRB resource assignment0 is used to indicate the number N of the continuous PRBs in the first RBG occupied by the UL-SBFD time-frequency resource, and the N PRBs are adjacent to a PRB in a RBG unoccupied by the UL-SBFD time-frequency resource. PRB resource assignment1 is used to indicate the number M of the continuous PRBs in the last RBG occupied by the UL-SBFD time-frequency resource, and the M PRBs are adjacent to a PRB in a RBG unoccupied by the UL-SBFD time-frequency resource.

Taking FIG. 6 as an example, for a RBG with a small index value (the first RBG occupied by the UL-SBFD time-frequency resource), the value (such as N) of the PRB resource indication parameter, PRB resource assignment0, indicates that N continuous PRBs with small index numbers in the RBG can be used for PDSCH data transmission. For a RBG with a large index value (the last RBG occupied by the UL-SBFD time-frequency resource), the value (such as M) of the PRB resource indication parameter, PRB resource assignment1, indicates that M continuous PRBs with large index numbers in the RBG can be used for PDSCH data transmission. Both N and M are represented by the values of the PRB resource indication parameter in Table 1.

Since the value of the PRB resource indication parameter is a binary number, the number of PRBs used is the sum of 1 and a decimal value corresponding to the binary value of the PRB resource indicator parameter. For example, the decimal value of the binary number 000 is 0 which represents 1 PRB, the decimal value of the binary number 001 is 1 which represents 2 PRBs, the decimal value of the binary number 111 is 7 which represents 8 PRBs, and so on. For example, taking FIG. 6 as an example, the value of PRB resource assignment0 can be set to 000, then N=1, which represents that one PRB in RGB2 is usable for PDSCH data transmission. The value of PRB resource assignment1 can be set to 101, then M=6, which represents that 6 RPBs in RBG14 are usable for PDSCH data transmission.

From the perspective of a UE, the UE determines PRB usage in a RBG based on the configuration of the UL-SBFD time-frequency resource, the parameter configuration of FDRATO for the PDSCH time-frequency resource, and the specific values in DCI. For example, the indexes of the first and last RBGs occupied by the UL-SBFD time-frequency resource is determined according to the configuration of the UL-SBFD time-frequency resource. Then, according to the value of the Frequency domain resource assignment in DCI, whether the first and last RBGs can be occupied by the PDSCH time-frequency resource, i.e., whether the value corresponding to the RBG is 1, is determined. Then, according to the value of the first and last RBGs, the UE determines whether the two parameters PRB resource assignment0 and PRB resource assignment1 are configured, and the values of these two parameters, so as to determine the number of PRBs used continuously in the first and last RBGs. Then, according to the size of RBG, the number of RBGs occupied, and the numbers of PRBs used continuously in the RBGs, the total number of PRBs used by PDSCH time-frequency resource is calculated, i.e., the available time-frequency resource for PDSCH time-frequency resource is determined.

To summarize, if the available time-frequency resource for PDSCH includes a target RBG, and the target RBG includes the first PRB unoccupied by the SBFD time-frequency resource and the second PRB occupied by the SBFD time-frequency resource, the base station transmits a frequency-domain resource allocation message to a UE, the UE receives the frequency-domain resource allocation message transmitted by the base station. The frequency-domain resource allocation message includes the frequency-domain resource indication parameter (such as Frequency domain resource assignment), the first PRB resource indication parameter (such as PRB resource assignment0), and the second PRB resource indication parameter (such as PRB resource assignment1). The frequency-domain resource indication parameter is used to indicate the index of the first RBG occupied by the SBFD time-frequency resource and the index of the last RBG occupied by the SBFD time-frequency resource. The first PRB resource indication parameter is configured to indicate the number N of the first PRBs in the first RBG occupied by the UL-SBFD time-frequency resource, and N PRBs are adjacent to a PRB in a RBG unoccupied by the SBFD time-frequency resource. The second PRB resource indication parameter is configured to indicate the number M of the first PRBs in the last RBG, and M PRBs are adjacent to a PRB in a RBG unoccupied by the SBFD time-frequency resource.

On this basis, the UE can determine the available time-frequency resource for PDSCH based on the PDSCH time-frequency resource, the SBFD time-frequency resource, the first PRB resource indication parameter, and the second PRB resource indication parameter.

Fifth, PUSCH frequency-domain resource allocation.

A method of allocating PDSCH frequency-domain resource can also be applied to PUSCH frequency-domain resource allocation. In the process of PUSCH frequency-domain resource allocation, the SBFD time-frequency resource coinciding with the PUSCH time-frequency resource can be instructed to be used for DL and/or a guard band, and the SBFD time-frequency resource instructed to be used for DL is recorded as an DL-SBFD time-frequency resource, where the DL-SBFD time-frequency resource instructed to be used for DL can be a DL sub-band. The SBFD time-frequency resource instructed to be used for a guard band is recorded as the guard-band time-frequency resource, and for ease of description, the SBFD time-frequency resource instructed to be used for DL is taken as an example, i.e., DL-SBFD time-frequency resource. The DL-SBFD time-frequency resources in the subsequent process can be replaced with a guard-band time-frequency resource, or with a DL-SBFD time-frequency resource and a guard-band time-frequency resource, and with the similar implementation principle.

For example, the resource allocation unit for PUSCH frequency domain resources is RBG, RBG is in units of PRB, the minimum RBG is 2 PRBs, and the maximum RBG is 16 PRBs. In addition, except for the first RBG and the last RBG in the BWP, the rest of the RBGs require each entire RBG to be scheduled as a unit.

When a DL-SBFD time-frequency resource only occupies part of a PRB of a RBG, if the RBG cannot be used to transmit PUSCH data, the band utilization will be reduced. If RBG #2 has a total of 7 PRBs to be configured as the DL-SBFD time-frequency resource, and RBG #14 has a total of 2 PRBs to be configured as the DL-SBFD time-frequency resource, therefore, a total of 7 PRBs in RBG#2 and RBG#14 cannot be used for PUSCH data transmission, i.e., RBG#2 has one PRB unable to be configured as PUSCH data transmission and RBG#14 has six PRBs unable to be configured as PUSCH data transmission.

In order to improve the frequency band utilization, such that the PRBs in some RBGs unused by the DL-SBFD time-frequency resource are able to transmit UL data, besides the frequency-domain resource indication parameter Frequency domain resource assignment in DCI format 1-1 and DCI format 1-2, a PRB resource indication parameter, such as PRB resource assignment, is additionally introduced. Considering that the maximum number of DL-SBFD time-frequency resource is only one, and the DL-SBFD time-frequency resource may be configured in the middle location of the bandwidth, and partial PRBs in two RBGs may not be occupied by the DL-SBFD time-frequency resource, the PRB resource indication parameters are configured to a maximum of two, i.e., PRB resource assignment0 and PRB resource assignment1.

For example, if the DL-SBFD time-frequency resource is configured on the upper side of the bandwidth or the lower side of the bandwidth, the PRB resource indication parameters only use PRB resource assignment0. If the DL-SBFD time-frequency resource is configured in the middle of the bandwidth, the PRB resource indication parameters are PRB resource assignment0 and PRB resource assignment1. PRB resource assignment0 corresponds to the RBG with a low index (i.e., the first RBG occupied by the DL-SBFD time-frequency resource), in which partial PRB resources are used for the DL-SBFD time-frequency resource, and PRB resource assignment1 corresponds to the RBG with a high index (i.e., the last RBG occupied by the DL-SBFD time-frequency resource), in which partial PRB resources are used for the DL-SBFD time-frequency resource. If the DL-SBFD time-frequency resource is relatively small and occupies only one RBG, then resource assignment0 is used by default. For example, PRB resource assignment0 may correspond to RGB2, PRB resource assignment 1 may correspond to RBG14, the two parameters have the same basic configuration, and the parameter values can be set according to the actual scheduling.

In one example, a PRB resource indication parameter takes effect and is used only when the FDRA is configured to FDRATO, if the FDRA is configured to use a DynamicSwitch mode by higher-level signaling, it is judged according to the value of the MSB in the Frequency-domain resource assignment. If the value of the MSB is 0, it indicates that FDRATO is used, and the new parameter is to be effective and used. If the value of the MSB is 1, it indicates that FDRAT1 is used, and the size of the new parameter is 0 bit, indicating that it is not used.

The number of bits occupied by the PRB resource indication parameter is determined based on the FDRA type and the RBG size. If FDRAT1 is used, the PRB resource indication parameter occupies 0 bit, and if FDRATO is used, the number of bits occupied by the PRB resource indication parameter is log2 (the RBG size). The bit size of the PRB resource indication parameter is determined according to Table 1, where Table 1 indicates the number of bits occupied by the PRB resource indication parameter.

Before introducing of PRB resource indication parameter(s)), except for the first and last RBG in the BWP, a RBG having partial available PRBs cannot be used for PUSCH data transmission. After introducing the PRB resource indication parameter(s), the RBG having partial available PRBs can be used for PUSCH data transmission, wherein the bit value corresponding to the RBG is set to 1 in the Frequency domain resource assignment. For example, if it is configured to use FDRATO, the value of Frequency domain resource assignment is 000111111111110000 before the introducing of the PRB resource indication parameter, the value of Frequency domain resource assignment is 001111111111111000 after the introduction of the PRB resource indication parameter, and the locations of RBG2 and RBG14 change from 0 to 1, i.e., the PRB resource indication parameter is introduced for RBG2 and RBG14.

A value of a PRB resource indication parameter indicates the number of continuous PRBs that are available for PUSCH data in the RBG, and the available PRB(s) in the RBG are contiguous to a PRB in the previous RBG or in the next RBG. For example, PRB resource assignment0 is used to indicate the number N of the continuous PRBs in the first RBG occupied by the DL-SBFD time-frequency resource, and the N PRBs are adjacent to a PRB in a RBG unoccupied by the DL-SBFD time-frequency resource. PRB resource assignment1 is used to indicate the number M of the continuous PRBs in the last RBG occupied by the DL-SBFD time-frequency resource, and the M PRBs are adjacent to a PRB in a RBG unoccupied by the DL-SBFD time-frequency resource.

Since the value of the PRB resource indication parameter is a binary number, the number of PRBs used is the sum of 1 and a decimal value corresponding to the binary value of the PRB resource indicator parameter. For example, the decimal value of the binary number 000 is 0 which is used to represent 1 PRB, the decimal value of the binary number 001 is 1 which is used to represent 2 PRBs the decimal value of the binary number 111 is 7, which is used to represent 8 PRBs, and so on.

From the perspective of a UE, the UE determines PRB usage in a RBG based on the configuration of the DL-SBFD time-frequency resource, the parameter configuration of FDRATO for the PDSCH time-frequency resource, and the specific values in DCI. For example, the indexes of the first and last RBGs occupied by the UL-SBFD time-frequency resource is determined according to the configuration of DL-SBFD time-frequency resource. Then, according to the value of the Frequency domain resource assignment in DCI, whether the first and last RBGs are occupied by the PUSCH time-frequency resource, i.e., whether the value corresponding to the RBG is 1, is determined. Then, according to the value of the first and last RBGs, the UE determines whether the two parameters PRB resource assignment0 and PRB resource assignment1 are configured, and the values of these two parameters, so as to determine the number of PRBs used continuously in the first and last RBG. Then, according to the size of RBG, the number of RBGs occupied, and the numbers of PRBs used continuously in the RBGs, the total number of PRBs used by PUSCH time-frequency resource is calculated, i.e., determining the available time-frequency resource for PUSCH time-frequency resource

To summarize, if the available time-frequency resource for PUSCH includes a target RBG, and the target RBG includes the first PRB unoccupied by the SBFD time-frequency resource and the second PRB occupied by the SBFD time-frequency resource, the base station transmits a frequency-domain resource allocation message to a UE, the UE receives the frequency-domain resource allocation message transmitted by the base station. The frequency-domain resource allocation message includes the frequency-domain resource indication parameter (such as Frequency domain resource assignment), the first PRB resource indication parameter (such as PRB resource assignment0), and the second PRB resource indication parameter (such as PRB resource assignment1). The frequency-domain resource indication parameter is used to indicate the index of the first RBG occupied by the SBFD time-frequency resource and the index of the last RBG occupied by the SBFD time-frequency resource. The first PRB resource indication parameter is configured to indicate the number N of the first PRBs in the first RBG occupied by the DL-SBFD time-frequency resource, and N PRB are adjacent to a PRB in a RBG unoccupied by the SBFD time-frequency resource. The second PRB resource indication parameter is configured to indicate the number M of the first PRBs in the last RBG occupied by the DL-SBFD, and M PRBs which are adjacent to a PRB in a RBG unoccupied by the SBFD time-frequency resource.

On this basis, the UE can determine the available time-frequency resource for PUSCH based on the PUSCH time-frequency resource, the SBFD time-frequency resource, the first PRB resource indication parameter, and the second PRB resource indication parameter.

In one example, the base station can determine a PUSCH time-frequency resource corresponding to a UE and a SBFD time-frequency resource corresponding to another UE, where the PUSCH time-frequency resource and the SBFD time-frequency resource can be located in the same UL time slot or special time slot, and the SBFD time-frequency resource is instructed to be used for DL. If there is an overlapping resource between the PUSCH time-frequency resource and the SBFD time-frequency resource, the base station can determine an available time-frequency resource based on the PUSCH time-frequency resources and the SBFD time-frequency resources, where the available time-frequency resource may be the time-frequency resource in the PUSCH time-frequency resource except the overlapping resource, and the base station can receive UL data corresponding to the UE based on the available time-frequency resource.

The UE can determine the PUSCH time-frequency resource and the SBFD time-frequency resource. If there is an overlapping resource between the PUSCH time-frequency resource and the SBFD time-frequency resource, the UE can determine an available time-frequency resource based on the PUSCH time-frequency resource and the SBFD time-frequency resource, where the available time-frequency resource may be the time-frequency resource in the PUSCH time-frequency resource except the overlapping resource, and the UE transmit UL data corresponding to this UE based on the available time-frequency resource.

If the available time-frequency resources include a target RBG including one or more PRB unoccupied by SBFD time-frequency resource and one or more PRBs occupied by SBFD time-frequency resource, the base station transmits a frequency-domain resource allocation message to the UE, and the UE receives the frequency-domain resource allocation message, as illustrated in the above examples.

It can be seen from the above technical solutions that when the SBFD time-frequency resource overlaps with the PDSCH time-frequency resource, the base station can make full use of the PDSCH time-frequency resource to schedule the transmission of the UE; the UE can be informed of the PDSCH time-frequency resource, and SBFD time-frequency resource configuration and PDSCH time-frequency resource configuration can be effectively implemented. From the perspective of the entire system, it can increase cell coverage, reduce transmission delay, and increase UL transmission capacity. It can support data transmission of the TDD systems, improve resource utilization, improve network coverage and network capacity, increase UL transmission resource and cell coverage, reduce UL transmission delay and increase UL transmission capacity. It can be clarified that the scheduling mechanism adopted by base station and UE in the situation that PDSCH crosses UL-SBFD symbols and ordinary symbols, ambiguity can be avoided in the behavior of base station and UE in this situation, and it can be ensured that base station and UE can transmit PDSCH data normally when SBFD is enabled.

When the SBFD time-frequency resource overlaps with the PUSCH time-frequency resource, the base station can make full use of the PUSCH time-frequency resource to schedule the transmission of the UE; the UE can be informed of the PUSCH time-frequency resource, and SBFD time-frequency resource configuration and PUSCH time-frequency resource configuration can be effectively implemented. From the perspective of the entire system, it can increase cell coverage, reduce transmission delay, and increase DL transmission capacity. It can support data transmission of the TDD systems, improve resource utilization, improve network coverage and network capacity, increase DL transmission resource and cell coverage, and reduce DL transmission delay and increase DL transmission capacity.

Based on the same invention conception, a data transmission apparatus corresponding to the above data transmission method is also provided, as well as a base station and a UE. Because the principle of solving problems via the base station and the UE is similar to the data transmission method, the implementation of the base station and the UE can see the implementation of the data transmission method, and the duplication will not be repeated.

Based on the same application conception as the above method, an example of the present disclosure proposes a data transmission apparatus, applied to the base station, including: a determining module, configured to determine a PDSCH time-frequency resource corresponding to a first UE and a SBFD time-frequency resource corresponding to a second UE, where the PDSCH time-frequency resource and the SBFD time-frequency resource are located in a same DL time slot or a same special time slot, and the SBFD time-frequency resource is instructed to be used for UL and/or a guard band; a transmitting module, configured to transmit DL data corresponding to the first UE based on the PDSCH time-frequency resource, wherein the first UE is an HD UE supporting SBFD capability; and a receiving module, configured to receive UL data corresponding to the second UE based on the SBFD time-frequency resource.

In one example, the transmitting module is, when transmitting the DL data corresponding to the first UE based on the PDSCH time-frequency resource, further used to: if there is no overlapping resource between the PDSCH time-frequency resource and the SBFD time-frequency resource, transmit the DL data corresponding to the first UE based on the PDSCH time-frequency resource; or, if there is an overlapping resource between the PDSCH time-frequency resource and the SBFD time-frequency resource, and when a data transmission scheme is to allow data transmission, determine an available time-frequency resource based on the PDSCH time-frequency resource and the SBFD time-frequency resource, wherein the available time-frequency resource is a time-frequency resource in the PDSCH time-frequency resource except the overlapping resource; and transmit the DL data corresponding to the first UE based on the available time-frequency resource.

In one example, the transmitting module is further used to: if there is the overlapping resource between the PDSCH time-frequency resource and the SBFD time-frequency resource, when the data transmission scheme is to prohibit the data transmission, prohibiting transmitting the DL data corresponding to the first UE based on the PDSCH time-frequency resource.

In one example, the PDSCH time-frequency resource is dynamically scheduled to transmit PDSCH initial transmission data; when the data transmission scheme is to allow data transmission, the transmitting module is, when transmitting the DL data corresponding to the first UE based on the available time-frequency resource, further used to: determine the target TBS based on a size of the available time-frequency resource, and transmit DL data matching for the target TBS on the available time-frequency resource; or perform rate matching on DL data corresponding to the first UE on the available time-frequency resource, and transmit the rate matched DL data on the available time-frequency resource.

The PDSCH time-frequency resource is dynamically scheduled to transmit PDSCH retransmission data based on HARQ feedback or PDSCH repetition transmission data, or, the PDSCH time-frequency resource is semi-persistently scheduled to transmit PDSCH initial transmission data, the PDSCH retransmission data based on the HARQ feedback or the PDSCH repetition transmission data; when the data transmission scheme is to allow the data transmission, the transmitting module is, when transmitting the DL data corresponding to the first UE based on the available time-frequency resource, further used to: perform rate matching for the DL data corresponding to the first UE on the available time-frequency resource, and transmit the rate matched DL data on the available time-frequency resource.

In one example, the transmitting module is, when transmitting the rate matched DL data on the available time-frequency resource, further used to: if an effective code rate corresponding to the rate matched DL data is less than a set effective code rate threshold, transmit the rate matched DL data on the available time-frequency resource.

The transmitting module is further used to: if the effective code rate corresponding to the rate matched DL data is not less than the set effective code rate threshold, prohibit transmitting the rate matched DL data on the available time-frequency resource.

In one example, the transmitting module is further used to: transmit indication information of the data transmission scheme to the first UE, the indication information is configured to indicate that the data transmission scheme is to allow or prohibit the data transmission. The transmitting module is, when transmitting the indication information of the data transmission scheme to the first UE, further used to: transmit an RRC message to the first UE, where the RRC message includes the indication information; or, transmit a DCI message to the first UE, where the DCI message includes the indication information.

In one example, the transmitting module is further used to: if the available time-frequency resource includes a target RBG, the target RBG includes one or more first PRBs unoccupied by the SBFD time-frequency resource and one or more second PRBs occupied by the SBFD time-frequency resource, transmit a frequency-domain resource allocation message to the first UE, where the frequency-domain resource allocation message includes first indication information and second indication information, the first indication information is used to indicate an index of the target RBG, and the second indication information is used to indicate a number of the first PRBs in the target RBG or a number of the second PRBs in the target RBG, so that the first UE determines the available time-frequency resource based on the first indication information and the second indication information.

In one example, the first indication information includes a frequency-domain resource indication parameter, the frequency-domain resource indication parameter is used to indicate at least one of an index of the first RBG occupied by the SBFD time-frequency resource or an index of a last RBG occupied by the SBFD time-frequency resource; where the target RBG includes at least one of the first RBG or the last RBG; the second indication information includes at least one of a first PRB resource indication parameter or a second PRB resource indication parameter. The first PRB resource indication parameter is configured to indicate the number N of the first PRBs in the first RBG which are adjacent to a PRB in a RBG unoccupied by the SBFD time-frequency resource. The second PRB resource indication parameter is configured to indicate a number M of the first PRBs in the last RBG which are adjacent to a PRB in a RBG unoccupied by the SBFD time-frequency resource.

Based on the same application conception as the above method, an example of the present disclosure proposes a data transmission apparatus, applied to the first UE, the first UE being an HD UE supporting SBFD capability, including: a determining module, configured to determine a PDSCH time-frequency resource and a SBFD time-frequency resource; wherein, the PDSCH time-frequency resource and the SBFD time-frequency resource are located in a same DL time slot or a same special time slot, and the SBFD time-frequency resource is instructed to be used for UL and/or a guard band; a processing module, configured to: if there is an overlapping resource between the PDSCH time-frequency resource and the SBFD time-frequency resource, determine an available time-frequency resource based on the PDSCH time-frequency resource and the SBFD time-frequency resource; wherein, the available time-frequency resource is a time-frequency resource in the PDSCH time-frequency resource except the overlapping resource; and receive DL data corresponding to the first UE based on the available time-frequency resource.

In one example, the processing module is, when determining the available time-frequency resource based on the PDSCH time-frequency resource and the SBFD time-frequency resource and receiving the DL data corresponding to the first UE based on the available time-frequency resource, further used to: if a data transmission scheme is to allow the data transmission, determine the available time-frequency resource based on the PDSCH time-frequency resource and the SBFD time-frequency resource, and receive the DL data corresponding to the first UE based on the available time-frequency resource; and the processing module is further used to: if the data transmission scheme is to prohibit the data transmission, prohibit receiving the DL data corresponding to the first UE based on the available time-frequency resource.

In one example, the PDSCH time-frequency resource is dynamically scheduled to transmit PDSCH retransmission data based on the HARQ feedback or the PDSCH repetition transmission data, or, the PDSCH time-frequency resource is semi-persistently scheduled to transmit PDSCH initial transmission data, PDSCH retransmission data based on HARQ feedback or PDSCH repetition transmission data; the apparatus further includes: a receiving module, used to receive indication information of the data transmission scheme transmitted by a base station, the indication information is configured to indicate that the data transmission scheme is to allow the data transmission, or the indication information is configured to indicate the data transmission scheme is to prohibit the data transmission; the determining module, further used to: determine whether the data transmission scheme is allowed for data transmission or prohibited for data transmission based on the indication information.

In one example, the receiving module is, when receiving the indication information of the data transmission scheme transmitted by the base station, further used to: receive an RRC message transmitted by the base station, the RRC message includes the indication information; or, receive a DCI message transmitted by the base station, the DCI message includes the indication information.

The receiving module is used to: if the available time-frequency resource includes a target RBG, the target RBG includes one or more first PRBs unoccupied by the SBFD time-frequency resource and a second PRB occupied by the SBFD time-frequency resource, receive a frequency-domain resource allocation message transmitted by a base station, the frequency-domain resource allocation message includes first indication information and second indication information, the first indication information is used to indicate an index of the target RBG, the second indication information is used to indicate a number of the first PRBs in the target RBG or a number of the second PRBs in the target RBG; and the processing module is, when determining the available time-frequency resource based on the PDSCH time-frequency resource and the SBFD time-frequency resource, further used to: determine the available time-frequency resource based on the PDSCH time-frequency resource, the SBFD time-frequency resource, the first indication information, and the second indication information.

In one example, the first indication information includes a frequency-domain resource indication parameter, the frequency-domain resource indication parameter is used to indicate at least one of an index of a first RBG occupied by the SBFD time-frequency resource or an index of a last RBG occupied by the SBFD time-frequency resource, where the target RBG includes at least one of the first RBG or the last RBG; the second indication information includes at least one of a first PRB resource indication parameter or a second PRB resource indication parameter .The first PRB resource indication parameter is configured to indicate a number N of the first PRBs in the first RBG which are adjacent to a PRB in a RBG unoccupied by the SBFD time-frequency resource. The second PRB resource indication parameter is configured to indicate a number M of the first PRBs in the last RBG which are adjacent to a PRB in a RBG unoccupied by the SBFD time-frequency resource.

Based on the same application conception as the above method, an example of the present disclosure proposes a data transmission apparatus, applied to the base station, including: a determining module, configured to determine a PUSCH time-frequency resource and a SBFD time-frequency resource; the PUSCH time-frequency resource and the SBFD time-frequency resource are located in a same UL time slot or a same special time slot, and the SBFD time-frequency resource is instructed to be used for DL and/or a guard band; a processing module, used to: if there is an overlapping resource between the PUSCH time-frequency resource and the SBFD time-frequency resource, determine an available time-frequency resource based on the PUSCH time-frequency resource and the SBFD time-frequency resource, the available time-frequency resource is a time-frequency resource in the PUSCH time-frequency resource except the overlapping resource; receive UL data corresponding to the first UE based on the available time-frequency resource; the first UE is an HD UE supporting SBFD capability; a transmitting module, used to transmit DL data corresponding to the second UE based on the SBFD time-frequency resource.

The apparatus further includes: a transmitting module, used to: if the available time-frequency resource includes a target RBG, the target RBG includes one or more first PRBs unoccupied by the SBFD time-frequency resource and one or more second PRBs occupied by the SBFD time-frequency resource, transmit a frequency-domain resource allocation message to the first UE, the frequency-domain resource allocation message includes first indication information and second indication information, wherein the first indication information is used to indicate an index of the target RBG, and the second indication information is configured to indicate a number of the first PRBs in the target RBG or a number of the second PRBs in the target RBG, so that the first UE determines the available time-frequency resource based on the first indication information and the second indication information.

In one example, the first indication information includes a frequency-domain resource indication parameter, the frequency-domain resource indication parameter is used to indicate at least one of an index of a first RBG occupied by the SBFD time-frequency resource or an index of a last RBG occupied by the SBFD time-frequency resource, where the target RBG includes at least one of the first RBG or the last RBG; the second indication information includes at least one of a first PRB resource indication parameter and a second PRB resource indication parameter. The first PRB resource indication parameter is configured to indicate a number N of the first PRBs in the first RBG which are adjacent to a PRB in a RBG unoccupied by the SBFD time-frequency resource. The second PRB resource indication parameter is configured to indicate a number M of the first PRBs in the last RBG which are adjacent to a PRB in a RBG unoccupied by the SBFD time-frequency resource.

Based on the same application conception as the above method, an example of the present disclosure proposes a data transmission apparatus, applied to the first UE, the first UE being an HD UE supporting SBFD capability, the apparatus includes: a determining module, used to determine a PUSCH time-frequency resource and a SBFD time-frequency resource; wherein, the PUSCH time-frequency resource and the SBFD time-frequency resource are located in a same UL time slot or a same special time slot, and the SBFD time-frequency resource is instructed to be used for DL and/or a guard band; a processing module, used to: if there is an overlapping resource between the PUSCH time-frequency resource and the SBFD time-frequency resource, determine an available time-frequency resource based on the PUSCH time-frequency resource and the SBFD time-frequency resource; wherein, the available time-frequency resource is a time-frequency resource in the PUSCH time-frequency resource except the overlapping resource; and a transmitting module, used to transmit UL data corresponding to the first UE based on the available time-frequency resource.

In one example, the apparatus further includes: a receiving module, used to: if the available time-frequency resource includes a target RBG, the target RBG includes one or more first PRB unoccupied by the SBFD time-frequency resource and one or more second PRB occupied by the SBFD time-frequency resource, receive a frequency-domain resource allocation message transmitted by a base station, the frequency-domain resource allocation message includes first indication information and second indication information, the first indication information is used to indicate an index of the target RBG, the second indication information is used to indicate a number of the first PRBs in the target RBG or a number of the second PRBs in the target RBG; and the processing module is, when determining the available time-frequency resource based on the PUSCH time-frequency resource and the SBFD time-frequency resource, further used to: determine the available time-frequency resource based on the PUSCH time-frequency resource, the SBFD time-frequency resource, the first indication information, and the second indication information.

In one example, the first indication information includes a frequency-domain resource indication parameter, the frequency-domain resource indication parameter is used to indicate at least one of an index of a first RBG occupied by the SBFD time-frequency resource or an index of a last RBG occupied by the SBFD time-frequency resource, where the target RBG includes at least one of the first RBG or the last RBG; the second indication information includes at least one of a first PRB resource indication parameter and a second PRB resource indication parameter. The first PRB resource indication parameter is configured to indicate a number N of the first PRBs in the first RBG which are adjacent to a PRB in a RBG unoccupied by the SBFD time-frequency resource. The second PRB resource indication parameter is configured to indicate a number M of the first PRBs in the last RBG which are adjacent to a PRB in a RBG unoccupied by the SBFD time-frequency resource.

Based on the same application conception as the above method, an example of the present disclosure proposes an electronic device (such as the base station, UEs, as in the above examples), the electronic device may include: one or more processors, and one or more machine-readable storage media, wherein the one or more machine-readable storage media store machine-executable instructions capable of being executed by the one or more processors; the one or more processors are used to execute the machine-executable instructions to implement the data transmission method disclosed in the above example of the present disclosure.

Based on the same application conception as the above method, an example of the present disclosure proposes a machine-readable storage medium, the machine-readable storage medium stores a plurality of computer instructions, when the computer instructions are executed by the processor, the data transmission method disclosed in the above example of the present disclosure can be implemented.

Wherein, the above machine-readable storage medium may be any electronic, magnetic, optical, or other physical storage apparatus, and may contain or store information, such as executable instructions, data, and the like. For example, the machine-readable storage medium may be a Radom Access Memory (RAM), a volatile memory, a non-volatile memory, a flash memory, a storage drive (e.g., hard disk driver), a solid state hard disk, any type of storage disk (e.g., compact disk, Digital Video Disk (DVD), etc.), or a similar storage medium, or a combination thereof.

The above are only implementations of the present disclosure and are not intended to limit the present disclosure. For those skilled in the art, this disclosure may have various modifications and changes. Any modification, equivalent replacement, and improvement made within the spirit and principle of this disclosure shall be included in the scope of claims of this disclosure.

## Claims

1. A data transmission method, applied to a base station, comprising:
determining a Physical Downlink Shared Channel, PDSCH, time-frequency resource corresponding to a first User Equipment, UE, and a Sub-Band Full-Duplex, SBFD, time-frequency resource corresponding to a second UE, wherein the PDSCH time-frequency resource and the SBFD time-frequency resource are located in a same Downlink, DL, time slot or a same special time slot, and the SBFD time-frequency resource is instructed to be used for Uplink, UL, and/or a guard band;
transmitting DL data corresponding to the first UE based on the PDSCH time-frequency resource, wherein the first UE is a Half-Duplex, HD, UE supporting SBFD capability; and
receiving UL data corresponding to the second UE based on the SBFD time-frequency resource.

2. The method according to claim 1, wherein transmitting the DL data corresponding to the first UE based on the PDSCH time-frequency resource comprises:
when there is no overlapping resource between the PDSCH time-frequency resource and the SBFD time-frequency resource, transmitting the DL data corresponding to the first UE based on the PDSCH time-frequency resource; or
when there is an overlapping resource between the PDSCH time-frequency resource and the SBFD time-frequency resource, and when a data transmission scheme is to allow data transmission,
determining an available time-frequency resource based on the PDSCH time-frequency resource and the SBFD time-frequency resource, wherein the available time-frequency resource is a time-frequency resource in the PDSCH time-frequency resource except the overlapping resource; and
transmitting the DL data corresponding to the first UE based on the available time-frequency resource.

3. The method of claim 2, further comprising:
when there is the overlapping resource between the PDSCH time-frequency resource and the SBFD time-frequency resource, and when the data transmission scheme is to prohibit the data transmission, prohibiting transmitting the DL data corresponding to the first UE based on the PDSCH time-frequency resource.

4. The method according to claim 3, wherein the PDSCH time-frequency resource is dynamically scheduled to transmit PDSCH initial transmission data; when the data transmission scheme is to allow the data transmission, transmitting the DL data corresponding to the first UE based on the available time-frequency resource comprises:
determining a target transport block size based on a size of the available time-frequency resource, and transmitting DL data matching the target transport block size on the available time-frequency resource; or
performing rate matching for the DL data corresponding to the first UE on the available time-frequency resource, and transmitting the rate matched DL data on the available time-frequency resource.

5. The method according to claim 3, wherein the PDSCH time-frequency resource is dynamically scheduled to transmit PDSCH retransmission data based on HARQ feedback or transmit PDSCH repetition transmission data, or the PDSCH time-frequency resource is semi-persistently scheduled to transmit PDSCH initial transmission data, the PDSCH retransmission data based on the HARQ feedback or the PDSCH repetition transmission data; when the data transmission scheme is to allow the data transmission, transmitting the DL data corresponding to the first UE based on the available time-frequency resource comprises:
performing rate matching for the DL data corresponding to the first UE on the available time-frequency resource, and transmitting the rate matched DL data on the available time-frequency resource.

6. The method according to claim 4 or 5, wherein,
transmitting the rate matched DL data on the available time-frequency resource comprises:
when an effective code rate corresponding to the rate matched DL data is less than a set effective code rate threshold, transmitting the rate matched DL data on the available time-frequency resource; and
the method further comprises:
when the effective code rate corresponding to the rate matched DL data is not less than the set effective code rate threshold, prohibiting transmitting the rate matched DL data on the available time-frequency resource.

7. The method according to claim 5, further comprising:
transmitting indication information of the data transmission scheme to the first UE, wherein the indication information is configured to indicate that the data transmission scheme is to allow or prohibit the data transmission.

8. The method according to claim 7, wherein transmitting the indication information of the data transmission scheme to the first UE comprises:
transmitting an RRC message to the first UE, wherein the RRC message comprises the indication information; or
transmitting a DCI message to the first UE, wherein the DCI message comprises the indication information.

9. The method according to claim 2, further comprising:
when the available time-frequency resource comprises a target RBG comprising one or more first PRBs unoccupied by the SBFD time-frequency resource and one or more second PRBs occupied by the SBFD time-frequency resource, transmitting a frequency-domain resource allocation message to the first UE,
wherein the frequency-domain resource allocation message comprises first indication information and second indication information, the first indication information is configured to indicate an index of the target RBG, and the second indication information is configured to indicate a number of the first PRBs in the target RBG or a number of the second PRBs in the target RBG, so that the first UE determines the available time-frequency resource based on the first indication information and the second indication information.

10. The method according to claim 9, wherein
the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG or the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

11. A data transmission method, applied to a first User Equipment, UE, the first UE being a Half-Duplex, HD, UE supporting Sub-Band Full-Duplex, SBFD, capability, comprising:
determining a Physical Downlink Shared Channel, PDSCH time-frequency resource and a SBFD time-frequency resource, wherein the PDSCH time-frequency resource and the SBFD time-frequency resource are located in a same Downlink, DL, time slot or a same special time slot, and the SBFD time-frequency resource is instructed to be used for Uplink, UL, and/or a guard band;
when there is an overlapping resource between the PDSCH time-frequency resource and the SBFD time-frequency resource, determining an available time-frequency resource based on the PDSCH time-frequency resource and the SBFD time-frequency resource, wherein the available time-frequency resource is a time-frequency resource in the PDSCH time-frequency resource except the overlapping resource; and
receiving DL data corresponding to the first UE based on the available time-frequency resource.

12. The method according to claim 11, wherein determining the available time-frequency resource based on the PDSCH time-frequency resource and the SBFD time-frequency resource and receiving the DL data corresponding to the first UE based on the available time-frequency resource comprise:
when a data transmission scheme is to allow data transmission,
determining the available time-frequency resource based on the PDSCH time-frequency resource and the SBFD time-frequency resource, and
receiving the DL data corresponding to the first UE based on the available time-frequency resource; and
the method further comprises:
when the data transmission scheme is to prohibit the data transmission, prohibiting receiving the DL data corresponding to the first UE based on the available time-frequency resource.

13. The method according to claim 12, wherein the PDSCH time-frequency resource is dynamically scheduled to transmit PDSCH retransmission data based on HARQ feedback or PDSCH repetition transmission data, or, the PDSCH time-frequency resource is semi-persistently scheduled to transmit PDSCH initial transmission data, the PDSCH retransmission data based on the HARQ feedback or the PDSCH repetition transmission data; the method further comprises:
receiving indication information of the data transmission scheme transmitted by a base station, wherein the indication information is configured to indicate that the data transmission scheme is to allow or prohibit the data transmission; and
determining whether the data transmission scheme is to allow or prohibit the data transmission based on the indication information.

14. The method according to claim 13, wherein receiving the indication information of the data transmission scheme transmitted by the base station comprises:
receiving an RRC message transmitted by the base station, wherein the RRC message comprises the indication information; or,
receiving a DCI message transmitted by the base station, wherein the DCI message comprises the indication information.

15. The method according to claim 11, further comprising:
when the available time-frequency resource comprises a target RBG comprising one or more first PRBs unoccupied by the SBFD time-frequency resource and one or more second PRBs occupied by the SBFD time-frequency resource, receiving a frequency-domain resource allocation message transmitted by a base station, wherein the frequency-domain resource allocation message comprises first indication information and second indication information, the first indication information is configured to indicate an index of the target RBG, the second indication information is configured to indicate a number of the first PRBs in the target RBG or a number of the second PRBs in the target RBG; and
wherein determining the available time-frequency resource based on the PDSCH time-frequency resource and the SBFD time-frequency resource comprises: determining the available time-frequency resource based on the PDSCH time-frequency resource, the SBFD time-frequency resource, the first indication information, and the second indication information.

16. The method according to claim 15, wherein the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG or the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

17. A data transmission method, applied to a base station, comprising:
determining a Physical Uplink Shared Channel, PUSCH, time-frequency resource corresponding to a first User Equipment, UE, and a Sub-Band Full-Duplex, SBFD, time-frequency resource corresponding to a second UE, wherein the PUSCH time-frequency resource and the SBFD time-frequency resource are located in a same Uplink, UL, time slot or a same special time slot, and the SBFD time-frequency resource is instructed to be used for Downlink, DL, and/or a guard band;
when there is an overlapping resource between the PUSCH time-frequency resource and the SBFD time-frequency resource, determining an available time-frequency resource based on the PUSCH time-frequency resource and the SBFD time-frequency resource, wherein the available time-frequency resource is a time-frequency resource in the PUSCH time-frequency resource except the overlapping resource;
receiving UL data corresponding to the first UE based on the available time-frequency resource, wherein the first UE is a Half-Duplex, HD, UE supporting SBFD capability; and
transmitting DL data corresponding to the second UE based on the SBFD time-frequency resource.

18. The method according to claim 17, further comprising:
when the available time-frequency resource comprises a target RBG comprising one or more first PRBs unoccupied by the SBFD time-frequency resource and one or more second PRBs occupied by the SBFD time-frequency resource, transmitting a frequency-domain resource allocation message to the first UE,
wherein the frequency-domain resource allocation message comprises first indication information and second indication information, the first indication information is configured to indicate an index of the target RBG, and the second indication information is configured to indicate a number of the first PRBs in the target RBG or a number of the second PRBs in the target RBG, so that the first UE determines the available time-frequency resource based on the first indication information and the second indication information.

19. The method according to claim 18, wherein the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG or the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

20. A data transmission method, applied to a first User Equipment, UE, the first UE being a Half-Duplex, HD, UE supporting Sub-Band Full-Duplex, SBFD, capability, comprising:
determining a Physical Uplink Shared Channel, PUSCH, time-frequency resource and a SBFD time-frequency resource, wherein the PUSCH time-frequency resource and the SBFD time-frequency resource are located in a same Uplink, UL, time slot or a same special time slot, and the SBFD time-frequency resource is instructed to be used for Downlink, DL, and/or a guard band;
when there is an overlapping resource between the PUSCH time-frequency resource and the SBFD time-frequency resource, determining an available time-frequency resource based on the PUSCH time-frequency resource and the SBFD time-frequency resource, wherein the available time-frequency resource is a time-frequency resource in the PUSCH time-frequency resource except the overlapping resource; and
transmitting UL data corresponding to the first UE based on the available time-frequency resource.

21. The method according to claim 20, further comprising:
when the available time-frequency resource comprises a target RBG comprising one or more first PRBs unoccupied by the SBFD time-frequency resource and one or more second PRBs occupied by the SBFD time-frequency resource, receiving a frequency-domain resource allocation message transmitted by a base station, wherein the frequency-domain resource allocation message comprises first indication information and second indication information, the first indication information is configured to indicate an index of the target RBG, the second indication information is configured to indicate a number of the first PRBs in the target RBG or a number of the second PRBs in the target RBG; and
wherein determining the available time-frequency resource based on the PUSCH time-frequency resource and the SBFD time-frequency resource comprises: determining the available time-frequency resource based on the PUSCH time-frequency resource, the SBFD time-frequency resource, the first indication information, and the second indication information.

22. The method according to claim 21, wherein the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG and the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

23. A data transmission apparatus, applied to a base station, comprising:
a determining module, configured to determine a Physical Downlink Shared Channel PDSCH, time-frequency resource corresponding to a first User Equipment, UE, and a Sub-Band Full-Duplex, SBFD, time-frequency resource corresponding to a second UE, wherein the PDSCH time-frequency resource and the SBFD time-frequency resource are located in a same Downlink, DL, time slot or a same special time slot, and the SBFD time-frequency resource is instructed to be used for Uplink, UL, and/or a guard band;
a transmitting module, configured to transmit DL data corresponding to the first UE based on the PDSCH time-frequency resource, wherein the first UE is a Half-Duplex, HD, UE supporting SBFD capability; and
a receiving module, configured to receive UL data corresponding to the second UE based on the SBFD time-frequency resource.

24. The apparatus according to claim 23, wherein the transmitting module is, when transmitting the DL data corresponding to the first UE based on the PDSCH time-frequency resource, further configured to:
when there is no overlapping resource between the PDSCH time-frequency resource and the SBFD time-frequency resource, transmit the DL data corresponding to the first UE based on the PDSCH time-frequency resource; or
when there is an overlapping resource between the PDSCH time-frequency resource and the SBFD time-frequency resource, and when a data transmission scheme is to allow data transmission,
determine an available time-frequency resource based on the PDSCH time-frequency resource and the SBFD time-frequency resource, wherein the available time-frequency resource is a time-frequency resource in the PDSCH time-frequency resource except the overlapping resource; and
transmit the DL data corresponding to the first UE based on the available time-frequency resource.

25. The apparatus according to claim 24, wherein
the transmitting module is further configured to: when there is the overlapping resource between the PDSCH time-frequency resource and the SBFD time-frequency resource, when the data transmission scheme is to prohibit the data transmission, prohibiting transmitting the DL data corresponding to the first UE based on the PDSCH time-frequency resource.

26. The apparatus according to claim 25, wherein
the PDSCH time-frequency resource is dynamically scheduled to transmit PDSCH initial transmission data; when the data transmission scheme is to allow data transmission, the transmitting module is, when transmitting the DL data corresponding to the first UE based on the available time-frequency resource, further configured to:
determine a target transport block size based on a size of the available time-frequency resource, and transmit DL data matching the target transport block size on the available time-frequency resource; or,
perform rate matching for the DL data corresponding to the first UE on the available time-frequency resource, and transmit the rate matched DL data on the available time-frequency resource.

27. The apparatus according to claim 25, wherein
the PDSCH time-frequency resource is dynamically schedule to transmit PDSCH retransmission data based on HARQ feedback or transmit PDSCH repetition transmission data, or, the PDSCH time-frequency resource is semi-persistently scheduled to transmit PDSCH initial transmission data, the PDSCH retransmission data based on the HARQ feedback or the PDSCH repetition transmission data; when the data transmission scheme is to allow the data transmission, the transmitting module is, when transmitting the DL data corresponding to the first UE based on the available time-frequency resource, further configured to:
perform rate matching for the DL data corresponding to the first UE on the available time-frequency resource, and transmit the rate matched DL data on the available time-frequency resource.

28. The apparatus according to claim 26 or 27, wherein
the transmitting module is, when transmitting the rate matched DL data on the available time-frequency resource, further configured to: when an effective code rate corresponding to the rate matched DL data is less than a set effective code rate threshold, transmit the rate matched DL data on the available time-frequency resource; and
the transmitting module is further configured to: when the effective code rate corresponding to the rate matched DL data is not less than the set effective code rate threshold, prohibit transmitting the rate matched DL data on the available time-frequency resource.

29. The apparatus according to claim 27, wherein the transmitting module is further configured to: transmit indication information of the data transmission scheme to the first UE, the indication information is configured to indicate that the data transmission scheme is to allow or prohibit the data transmission.

30. The apparatus according to claim 29, wherein
the transmitting module is, when transmitting the indication information of the data transmission scheme to the first UE, further configured to:
transmit an RRC message to the first UE, wherein the RRC message comprises the indication information; or,
transmit a DCI message to the first UE, wherein the DCI message comprises the indication information.

31. The apparatus according to claim 24, wherein
the transmitting module is further configured to: when the available time-frequency resource comprise a target RBG comprising one or more first PRBs unoccupied by the SBFD time-frequency resource and one or more second PRBs occupied by the SBFD time-frequency resource, transmit a frequency-domain resource allocation message to the first UE,
wherein the frequency-domain resource allocation message comprises first indication information and second indication information, the first indication information is configured to indicate an index of the target RBG, and the second indication information is configured to indicate a number of the first PRBs in the target RBG or a number of the second PRBs in the target RBG, so that the first UE determines the available time-frequency resource based on the first indication information and the second indication information.

32. The apparatus according to claim 31, wherein the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG or the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

33. A data transmission apparatus, applied to a first User Equipment, UE, the first UE being a Half-Duplex, HD, UE supporting Sub-Band Full-Duplex, SBFD, capability, comprising:
a determining module, configured to determine a Physical Downlink Shared Channel, PDSCH, time-frequency resource and a SBFD time-frequency resource, wherein the PDSCH time-frequency resource and the SBFD time-frequency resource are located in a same Downlink, DL, time slot or a same special time slot, and the SBFD time-frequency resource is instructed to be used for Uplink, UL, and/or a guard band;
a processing module, configured to: when there is an overlapping resource between the PDSCH time-frequency resource and the SBFD time-frequency resource, determine an available time-frequency resource based on the PDSCH time-frequency resource and the SBFD time-frequency resource; wherein the available time-frequency resource is a time-frequency resource in the PDSCH time-frequency resource except the overlapping resource; and receive DL data corresponding to the first UE based on the available time-frequency resource.

34. The apparatus according to claim 33, wherein the processing module is, when determining the available time-frequency resource based on the PDSCH time-frequency resource and the SBFD time-frequency resource and receiving the DL data corresponding to the first UE based on the available time-frequency resource, further configured to: when a data transmission scheme is to allow data transmission, determine the available time-frequency resource based on the PDSCH time-frequency resource and the SBFD time-frequency resource, and receive the DL data corresponding to the first UE based on the available time-frequency resource; and
the processing module is further configured to: when the data transmission scheme is to prohibit the data transmission, prohibit receiving the DL data corresponding to the first UE based on the available time-frequency resource.

35. The apparatus according to claim 34, wherein, the PDSCH time-frequency resource is dynamically scheduled to transmit PDSCH retransmission data based on HARQ feedback or PDSCH repetition transmission data, or, the PDSCH time-frequency resource is semi-persistently scheduled to transmit PDSCH initial transmission data, PDSCH retransmission data based on the HARQ feedback or the PDSCH repetition transmission data; the apparatus further comprises:
a receiving module, configured to receive indication information of the data transmission scheme transmitted by a base station, wherein the indication information is configured to indicate that the data transmission scheme is to allow the data transmission, or the indication information is configured to indicate the data transmission scheme is prohibited for data transmission; and
the determining module, is further configured to: determine whether the data transmission scheme is to allow or prohibit the data transmission based on the indication information.

36. The apparatus according to claim 35, wherein
the receiving module is, when receiving the indication information of the data transmission scheme transmitted by the base station, further configured to:
receive an RRC message transmitted by the base station, wherein the RRC message comprises the indication information; or,
receive a DCI message transmitted by the base station, wherein the DCI message comprises the indication information.

37. The apparatus according to claim 33, further comprising:
a receiving module, configured to: when the available time-frequency resource comprises a target RBG comprising one or more first PRBs unoccupied by the SBFD time-frequency resource and one or more second PRBs occupied by the SBFD time-frequency resource, receive a frequency-domain resource allocation message transmitted by a base station, wherein the frequency-domain resource allocation message comprises first indication information and second indication information, the first indication information is configured to indicate an index of the target RBG, the second indication information is configured to indicate a number of the first PRBs in the target RBG or a number of the second PRBs in the target RBG; and
wherein the processing module is, when determining the available time-frequency resource based on the PDSCH time-frequency resource and the SBFD time-frequency resource, further configured to: determine the available time-frequency resource based on the PDSCH time-frequency resource, the SBFD time-frequency resource, the first indication information, and the second indication information.

38. The apparatus according to claim 37, wherein, the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG or the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

39. A data transmission apparatus, applied to a base station, comprising:
a determining module, configured to determine a Physical Uplink Shared Channel, PUSCH, time-frequency resource corresponding to a first User Equipment, UE, and a Sub-Band Full-Duplex, SBFD, time-frequency resource corresponding to a second UE, wherein the PUSCH time-frequency resource and the SBFD time-frequency resource are located in a same Uplink, UL, time slot or a same special time slot, and the SBFD time-frequency resource is instructed to be used for Downlink, DL, and/or a guard band;
a processing module, configured to: when there is an overlapping resource between the PUSCH time-frequency resource and the SBFD time-frequency resource, determine an available time-frequency resource based on the PUSCH time-frequency resource and the SBFD time-frequency resource, wherein the available time-frequency resource is a time-frequency resource in the PUSCH time-frequency resource except the overlapping resource; receive UL data corresponding to the first UE based on the available time-frequency resource; wherein, the first UE is a Half-Duplex, HD, UE supporting SBFD capability.
a transmitting module, configured to transmit DL data corresponding to the second UE based on the SBFD time-frequency resource.

40. The apparatus according to claim 39, further comprising:
a transmitting module, configured to: when the available time-frequency resource comprises a target RBG comprising one or more first PRBs unoccupied by the SBFD time-frequency resource and one or more second PRBs occupied by the SBFD time-frequency resource, transmit a frequency-domain resource allocation message to the first UE,
wherein the frequency-domain resource allocation message comprises first indication information and second indication information, the first indication information is configured to indicate an index of the target RBG, and the second indication information is configured to indicate a number of the first PRBs in the target RBG or a number of the second PRBs in the target RBG, so that the first UE determines the available time-frequency resource based on the first indication information and the second indication information.

41. The apparatus according to claim 40, wherein the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG or the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

42. A data transmission apparatus, applied to a first User Equipment, UE, the first UE being a Half-Duplex, HD, UE supporting Sub-Band Full-Duplex, SBFD, capability, comprising:
a determining module, configured to determine a Physical Uplink Shared Channel, PUSCH, time-frequency resource and a SBFD time-frequency resource, wherein the PUSCH time-frequency resource and the SBFD time-frequency resource are located in a same Uplink, UL, time slot or a same special time slot, and the SBFD time-frequency resource is instructed to be used for Downlink, DL, and/or a guard band;
a processing module, configured to: when there is an overlapping resource between the PUSCH time-frequency resource and the SBFD time-frequency resource, determine an available time-frequency resource based on the PUSCH time-frequency resource and the SBFD time-frequency resource; wherein the available time-frequency resource is a time-frequency resource in the PUSCH time-frequency resource except the overlapping resource; and
a transmitting module, configured to transmit UL data corresponding to the first UE based on the available time-frequency resource.

43. The apparatus according to claim 42, further comprising:
a receiving module, configured to: when the available time-frequency resource comprises a target RBG comprising one or more first PRBs unoccupied by the SBFD time-frequency resource and one or more second PRBs occupied by the SBFD time-frequency resource, receive a frequency-domain resource allocation message transmitted by a base station, wherein the frequency-domain resource allocation message comprises first indication information and second indication information, the first indication information is configured to indicate an index of the target RBG, the second indication information is configured to indicate a number of the first PRBs in the target RBG or a number of the second PRBs in the target RBG; and
wherein the processing module is, when determining the available time-frequency resource based on the PUSCH time-frequency resource and the SBFD time-frequency resource, further configured to: determine the available time-frequency resource based on the PUSCH time-frequency resource, the SBFD time-frequency resource, the first indication information, and the second indication information.

44. The apparatus according to claim 43, wherein, the first indication information comprises a frequency-domain resource indication parameter configured to indicate at least one of an index of a first RBG occupied by the SBFD time-frequency resource or an index of a last RBG occupied by the SBFD time-frequency resource, the target RBG comprises at least one of the first RBG and the last RBG;
the second indication information comprises at least one of a first PRB resource indication parameter or a second PRB resource indication parameter, the first PRB resource indication parameter is configured to indicate a number N of the first PRBs in the first RBG which are adjacent to a PRB in a RBG unoccupied by the SBFD time-frequency resource; and the second PRB resource indication parameter is configured to indicate a number M of the first PRBs in the last RBG which are adjacent to a PRB in a RBG unoccupied by the SBFD time-frequency resource.

45. An electronic device, comprising: one or more processors, and one or more machine-readable storage media, wherein the one or more machine-readable storage media store machine-executable instructions capable of being executed by the one or more processors, wherein the one or more processors are configured to execute the machine-executable instructions to implement the method as described in any one of claims 1-22.
